# EUROPÄISCHE PATENTSCHRIFT

(11) **EP 1 035 771 B1**
(45) Veröffentlichungstag und Bekanntmachung des Hinweises auf die Patenterteilung: **03.11.2004**
(21) Anmeldenummer: 98965156.7
(22) Anmeldetag: 11.11.1998
(51) Int. Cl.: A01N 25/30, A01N 25/04, A01N 57/20

(54) **TENSIDSYSTEME FÜR FLÜSSIGE WÄSSRIGE ZUBEREITUNGEN**
SURFACTANT SYSTEMS FOR LIQUID AQUEOUS PREPARATIONS
SYSTEMES TENSIOACTIFS POUR PREPARATIONS AQUEUSES LIQUIDES

(30) Priorität: 27.11.1997 DE 19752552
(43) Veröffentlichungstag der Anmeldung: 20.09.2000
(73) Patentinhaber: Bayer CropScience GmbH, 65929 Frankfurt/Main (DE)
(72) Erfinder: MAIER, Thomas, D-65719 Hofheim (DE); WÜRTZ, Jochen, D-55543 Bad Kreuznach (DE)
(86) Internationale Anmeldenummer: PCT/EP1998/007191
(87) Internationale Veröffentlichungsnummer: WO 1999/027781

(56) Entgegenhaltungen:
- EP-A- 0 006 348
- EP-A- 0 472 310
- EP-A- 0 617 894
- WO-A-90/07277
- WO-A-96/08150
- DE-A- 3 624 910
- GB-A- 2 049 427
- GB-A- 2 157 952
- GB-A- 2 267 825

## Beschreibung

Die Erfindung betrifft das technische Gebiet der Tensidsysteme für flüssige wässrige oder wäßrig-organische Formulierungen (Zubereitungen), vorzugsweise mit einem Anteil einer organischen und einer wässrigen Phase in Form einer Mikroemulsion. Die Erfindung betrifft dabei bevorzugt Tensidsysteme für Einphasenoder Mehrphasen-Formulierungen von einem oder mehreren Wirkstoffen, wobei mindestens einer der Wirkstoffe in Wasser gut löslich ist. Die Wirkstoffe können dabei beispielsweise Wirkstoffe aus den Gebieten der Medizin oder Landwirtschaft oder auch andere Stoffe mit besonderer technischer Funktion wie z. B. Farbmittel sein. Insbesondere betrifft die Erfindung Mikroemulsionen von Pflanzenschutzmitteln mit einer Kombination aus wasserlöslichen und in Wasser praktisch unlöslichen Wirkstoffen, speziell Mikroemulsionen von Glufosinate und Oxyfluorfen oder Glyphosate und Oxyfluorfen.

Häufig werden Kombinationen von Wirkstoffen eingesetzt, um die Eigenschaften der Einzelwirkstoffe bei der Anwendung gemeinsam zu nutzen oder auch weil die Einzelwirkstoffe in der Kombination synergistisch sind, d. h. überadditive Wirkungssteigerungen ergeben. Die Wirkstoffe werden außerdem üblicherweise nicht als Reinstoffe, sondern je nach Anwendungsgebiet und gewünschter physikalischer Beschaffenheit der Anwendungsform in Kombination mit bestimmten Hilfsstoffen eingesetzt, d. h. sie werden "formuliert". Im Falle einer Kombination von Wirkstoffen chemisch unterschiedlichen Typs stellt sich dem Formulierungsfachmann dann häufig das Problem der Unverträglichkeit der Einzelwirkstoffe untereinander und mit den Hilfsstoffen in der gemeinsamen Formulierung. Um die Vorteile der kombinierten Wirkstoffe voll nutzen zu können, sind stabile Co-Formulierungen von besonderem Interesse.

Prinzipiell können Kombinationen verschiedener Wirkstoffe auf unterschiedliche Art formuliert werden, je nachdem welche biologischen und/oder chemisch physikalischen Parameter vorgegeben sind. Allgemein kommen als Formulierungsmöglichkeiten dafür beispielsweise in Betracht: Spritzpulver (WP), Ölin-Wasser- bzw. Wasser-in-Öl-Emulsionen (EW bzw. EO), Suspensionen (SC), Suspoemulsionen (SE) oder auch Granulate zur Boden- oder Streuapplikation bzw. wasserdispergierbare Granulate (WG). Die genannten Formulierungstypen sind im Prinzip bekannt und werden z.B. beschrieben in: Winnacker-Küchler, "Chemische Technologie", Band 7, C.Hauser-Verlag, München, 4.Auflage 1986; van Valkenburg, "Pesticides Formulations", Marcel-Dekker N.Y., 1973; K.Martens, "Spray Drying Handbook", 3rd Ed., 1979, G.Goodwin Ltd. London.

Handelt es sich bei den zu kombinierenden Wirkstoffen um chemisch-physikalisch gegensätzliche Verbindungen, sind die Formulierungsmöglichkeiten naturgemäß beschränkt. So gehören beispielsweise die Breitspektrum-Herbizide Glufosinate und Glyphosate mit Phosphinoyl- bzw. Phosphonogruppen und deren Salzen zu den polaren, hydrophilen Wirkstoffen, die in Wasser relativ gut löslich sind. Herbizide aus der Gruppe der Diphenylether wie Oxyfluorfen sind dagegen in Wasser praktisch unlöslich.

Der kombinierte Einsatz von Herbiziden der vorstehend aufgeführten Art ist bereits bekannt. Beispielsweise werden in der DE-A-19501986 (WO 96/22692, ZA-A-96/0502) synergistische Kombinationen von Glufosinate-ammonium und dessen Salzen mit Oxyfluorfen beschrieben und als mögliche Co-Formulierungen Spritzpulver (WP), wasserdispergierbare Granulate (WDG) und Öl-in-Wasser-Emulsionen (EW) erwähnt. Weitere Co-Formulierungen von Glufosinate-ammonium und Oxyfluorfen sind aus US-A-5324708 und Research Disclosure 275 (1987), 154 bekannt. Daneben ist die Herstellung von Granulaten für derartige Wirkstoffkombinationen beschrieben; siehe EP-A-448538, EP-A-0394211.

Weiterhin sind z.B. wäßrige Dispersionen mit Glufosinate oder dessen Salzen und einem in Wasser unlöslichen Herbizid bekannt (JP-A-07089817). Insbesondere sind wäßrige Dispersionen mit Glufosinate-ammonium und Linuron, Monolinuron, Metolachlor oder Alachlor (EP-A-0244754) bzw. mit Glufosinate-ammonium und Diuron oder Simazin (EP-A-0499798) bekannt.

Kombinationen von Glyphosate(salzen) und Oxyfluorfen sind aus WO 84/03607 und EP-A-0143547 bekannt.

Keine der genannten Formulierungen stellt jedoch eine Mikroemulsion dar oder enthält Anteile einer Mikroemulsion. Im Gegensatz zu den milchig-trüben Makroemulsionen und Suspensionen sind Mikroemulsionen bzw. mizellare Lösungen - bedingt durch die kleine Teilchengröße (≤ 100 nm) - optisch transparent. Ein besonderer Vorteil der Mikroemulsionen besteht in ihrer thermodynamischen Stabilität, weshalb Mikroemulsionen theoretisch unbegrenzt lagerstabil und haltbar sind. Dagegen sind Makroemulsionen bzw. Suspensionen in der Regel nur kinetisch stabil, und nach einer individuell unterschiedlich langen Zeit ist mit Phasentrennung und damit einem "Zerfall" der Formulierung zu rechnen.

Gegenüber den ebenfalls optisch transparenten Emulsionskonzentraten (EC) zeichnen sich Mikroemulsionen daneben durch einen in der Regel reduzierten Gewichtsanteil an Lösungsmitteln aus. Aufgrund der starken Absenkung der Grenzflächenspannung zwischen der wäßrigen und der Öl-Phase durch die jeweiligen Emulgatorsysteme kann hier weiterhin auf die ansonsten weit verbreiteten Verdickungsmittel zur Stabilisierung der Formulierung verzichtet werden. Da Grenz- und Oberflächenspannung miteinander korrelieren (siehe Young'schen Gleichungen), brauchen in derartigen mizellaren Lösungen zudem häufig keine Antischaum-Mittel eingesetzt werden.

Ein weiterer Vorzug von Mikroemulsionen besteht darin, daß die im Konzentrat vorhandenen sehr kleinen Öl- bzw. Wassertröpfchen bei Verdünnung mit Wasser erhalten bleiben oder in stabile Makroemulsionströpfchen umgewandelt werden. Daher ergeben sich bei der vor der biologischen Anwendung üblichen Verdünnung mit Wasser feinteilige Spritzbrühen, die eine Verstopfung von Sprühgeräten ausschließen. Zudem sind Mikroemulsionen vorteilhafterweise mit sehr kleinem Energieeintrag und technisch einfachen Rührwerkzeugen herstellbar, d.h. bereits bei der Fertigung ergeben sich gegenüber den thermodynamisch instabilen obengenannten Formulierungen Vorteile nicht nur in Form von Materialeinsparungen, sondern auch von Energiekostenerspamis.

Beispiele für die Herstellung pestizider Mikroemulsionen finden sich u.a. in den Druckschriften WO-A-9006681, WO-A-9314630, EP-A-0160182, EP-A-0533057, EP-A-499587, EP-A-500401, EP-A-432062, DE-A-3624910, DE-A-3235612, EP-A-648414 und EP-A-617 894.

Die zugehörigen Mikroemulsionen enthalten jedoch weder Glufosinate-ammonium noch Glyphosate(salze), und die in den genannten Schriften offengelegten Emulgatoren, Netz- und Dispergiermittel sind für die Herstellung Glufosinate und/oder Glyphosate enthaltender Mikroemulsionen meist ungeeignet; ihre Verwendung führt zu instabilen Formulierungen, gekennzeichnet durch eine starke Trübung und nachfolgende Phasentrennung.

Weiterhin ist bekannt, daß sich mit Mischungen von Fettaminethoxylaten verschiedener Ethoxylierungsgrade (GB-A-2267825) bzw. von Fettaminethoxylaten und quaternisierten kationischen Tensiden (US-A-5565409) in Gegenwart weiterer tensidischer Komponenten oder von Kompatibilitäts-Vermittlern Mikroemulsionen mit Glyphosate(salzen) und Oxyfluorfen herstellen lassen. Die in den Druckschriften erwähnten Emulgatoren sind rein basischer bzw. kationischer Natur.

Neben den erwähnten allgemeinen Vorteilen der Mikroemulsionen ist jedoch auch bekannt, daß Mikroemulsionen insofern "kritische" Systeme sind, als sie in der Regel empfindlich auf Veränderungen der Temperatur und/oder einen Austausch oder die Zugabe einzelner Komponenten reagieren. Eine Modifikation durch Zugabe weiterer Tenside ist meist nicht möglich und erschwert eine Anpassung der Mikroemulsionen an die jeweils eingesetzten Wirkstoffe und Wirkstoffkombinationen oder an andere Anwendungsbedingungen wie Mengenverhältnis der Wirkstoffe, Temperaturschwankungen bei der Lagerung, Klimazonen, etc.

Inwieweit stabile Mikroemulsionen im Einzelfall herstellbar sind ist bisher schwer voraussagbar und erfordert meist eine spezielle Abstimmung aller Komponenten und Mengenverhältnisse. Es besteht deshalb grundsätzlich ein Bedarf an Tensidsystemen, welche die Herstellung stabiler Mikroemulsionen ermöglichen.

Es ist außerdem bekannt, daß sich die Wirkung von Pestiziden durch Zugabe bestimmter oberflächenaktiver Substanzen deutlich steigern läßt. So wurden zur Wirkungssteigerung von Glyphosate(salzen) beispielsweise alkoxylierte Fettamine vorgeschlagen (EP-A-0290416). Daneben sind auch Isopropylammoniumsalze der Ester aus ortho-Phosphorsäure und dreifach ethoxyliertem Butanol als Tensidkomponente(n) zur Erhöhung der biologischen Aktivität von Glyphosate(salzen) beschrieben worden (DE-A-4116516). Analog beobachtet man im Falle von Glufosinate-ammonium eine starke Erhöhung der Wirksamkeit in Gegenwart von C₁₂/C₁₄-Fettalkohol-diglykolethersulfat-Natrium (EP-A-0476555, EP-A-0048436, EP-A-0336151 oder US-A-4400196). Allgemein sind Alkylpolyglykolethersulfate daneben auch für eine Reihe anderer Herbizide, unter anderem auch für Herbizide vom Typ der Diphenylether, als Penetrationshilfsmittel und Wirkungsverstärker bekannt (EP-A-0476555). Folglich besteht besonderes Interesse an Formulierungen, die derartige Wirkungsverstärker entweder direkt als Hilfsmittel enthalten oder aber deren "Einbau" zuungunsten der technisch notwendigen Emulgatormischung gestatten. Damit die anwendungstechnischen Eigenschaften der Formulierungen sowohl hinsichtlich deren Stabilität als auch hinsichtlich der gewünschten Wirksamkeit erreicht werden können, benötigt der Fachmann geeignete Tensidsysteme. Deshalb besteht weiterhin ein verstärkter Bedarf an Tensidsystemen, welche gestatten, die Wirkung der formulierten Wirkstoffe vorteilhaft zur Entfaltung zu bringen.

Aus GB-A-2049427 sind außerdem nicht-wäßrige emulgierbare Konzentrate (ECs) bekannt, welche Tenside aus der Gruppe der sauren Phosphorsäureester und Fettamine enthalten.

EP-A-0472310 beschreibt flüssige Formulierungen auf Basis eines Tensidsystems mit nur geringem augenreizenden Effekt, enthaltend ein relativ gut wasserlösliches polyoxyalkyliertes Alkylamin mit mindestens 7 Mol Alkylenoxid und andere Tenside, z. B. auch saure Phosphorsäureester.

WO-A-90/07277 betrifft Makroemulsionen, speziell Wasser-in-Öl-Emulsionen, welche auch Polyoxyalkylamine und auch saure Polyoxyphosphatester enthalten können. In dem speziellen Beispiel Nr. II auf Seite 7 ist eine Makroemulsion mit hoher Anteil an zugemischtem organischem Lösungsmittel und einem öllöslichen Wirkstoff im Vergleich zum Anteil an Tensiden beschrieben.

EP-A-0006348 beschreibt in allgemeiner Form Tensidkombinationen für Pestizidformulierungen, welche saure Phosphorsäureester, polyoxyalkylierte Amine und nichtionische polyoxyalkylierte Tenside, Ester oder Glykole enthalten können. Als flüssige Formulierungen werden lediglich emulgierbare Konzentrate (ECs) und Makroemulsionen oder Suspensionen genannt.

WO-A-96/08150 betrifft wässrige Mikroemulsionen für pestizide Wirkstoffe, welche ein Tensidgemisch aus ethoxylierten Säuren (wie ethoxylierte Ölsäure), Alkylpolyglykosiden, ethoxyliertem Rizinusöl und einem Kotensid sowie gegebenenfalls ethoxyliertem Alkyl-phenyl-phosphat enthalten. Als Kotenside kommen auch Alkylamine in Frage. Die Kombination von sauren Phosphorsäureestern und basischen Kotenside zur Herstellung von Mikroemulsionen wird darin nicht offenbart.

Gegenstand der Erfindung sind thermodynamisch stabile flüssige wässrige oder wässrig-organische Formulierungen, dadurch gekennzeichnet, dass sie ein Tensidsystem aus
- einem oder mehreren basischen Kotensiden (Tensidkomponente 1) und
- einem oder mehreren Tensiden aus der Gruppe der sauren Phosphorsäureester (Tensidkomponente 2)
enthalten, wobei die basischen Kotenside besser in einer Ölphase als in Wasser löslich sind und keine mizellaren Strukturen in Wasser ausbilden.

Gegenstand der Erfindung sind auch die flüssigen wäßrigen oder wäßrigorganischen Formulierungen, welche die erfindungsgemäßen Tensidsysteme enthalten, insbesondere Formulierungen, welche
(a) einen oder mehrere in Wasser lösliche Wirkstoffe (Wirkstoffe vom Typ (a)) und
(b) gegebenenfalls einen oder mehrere in Wasser unlösliche Wirkstoffe (Wirkstoffe vom Typ (b)),
(c) gegebenenfalls organische Lösungsmittel,
(d) das erfindungsgemäße Tensidsystem (Komponentenmischung (d))
und Wasser enthalten.

Darüber hinaus kann das Tensidsystem bzw. können die entsprechenden Formulierungen gegebenenfalls weitere Komponenten enthalten, beispielsweise weitere Tenside bzw. weitere Wirkstoffe und/oder im Pflanzenschutz übliche Hilfsmittel wie Inertmaterialien, Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert oder die Viskosität beeinflussende Mittel

Ein basisches Kotensid im Sinne der Erfindung ist, abgesehen von der Basizität, eine in einer Öl-Phase besser als in Wasser lösliche, grenzflächenaktive und damit die Grenzflächenspannung zwischen diesen Phasen mindernde Komponente, die aufgrund ihrer zu geringen Amphiphilie in Wasser selbst keine mizellaren Strukturen ausbildet. Die hier als Kotenside bezeichneten Substanzen sind insbesondere dadurch gekennzeichnet, daß sie in wäßriger Lösung keine - z.B. mit Lichtstreumessungen oder anderen Verfahren nachweisbaren - Aggregate ausbilden.

Geeignete basische (kationogene) Kotenside (Tensidkomponente 1) sind beispielsweise:
(a1) N-Alkylamine wie primäre, sekundäre oder tertiäre N-Alkylamine, beispielsweise mit jeweils 5 bis 22 C-Atomen, vorzugsweise 5 bis 14 C-Atomen, z. B. n- oder i-Pentyl- oder Hexylamin, n-Octylamin, n-Decylamin, n-Dodecylamin oder n-Tetradecylamin, oder unsubstituierte oder substituierte Cycloalkylamine mit vorzugsweise 5 bis 12 C-Atomen, z.B. Cyclohexylamin,
(b1) oxalkylierte Produkte der N-Alkylamine, vorzugsweise Produkte aus Fettaminen (z.B. C₈-C₂₂-Fettaminen) mit Ethylenoxid und/oder Propylenoxid, insbesondere Fettamin-ethoxylate mit 8 bis 18 C-Atomen im Fettalkylteil und 1 bis 6 Ethylenoxy-Einheiten (EO), wobei die EO-Einheiten in einer oder in 2 Ketten an der Aminogruppe gebunden vorhanden sind. Beispiele sind Kokosfettaminethoxylate wie Genamin C-020® (Clariant), die formal als Reaktionsprodukte von N,N'-Bis-(2-hydroxyethyl)-alkylamin mit Alkylenoxiden, vorzugsweise Ethylenoxid und/oder Propylenoxid, bezeichnet werden können;
(c1) Alkylaminpolypropylenamine ("Polyamine") wie z. B. Kokosalkylpropylendiamine, -triamine oder -polyamine (z.B. ® Dinoram C, ® Trinoram C bzw. ® Polyram C; jeweils Elf Atochem);
(d1) oxalkylierte Produkte von Amiden oder N-substituierten Amiden, wie Carbonsäureethanolamide, vorzugsweise auf Basis von Alkancarbonsäuren mit 8 bis 18 C-Atomen und Ethanolamin oder Diethanolamin, beispielsweise Comperlan LS® (Henkel), oder oxalkylierte N-(Aminoalkyl)-amide oder N,N-Bis(aminoalkyl)amide;
(e1) Alkylamidopropylamine, beispielsweise solche auf Basis einer C₈-C₁₈-Alkancarbonsäure und Diaminen wie DMAPA (= N,N-Dimethylpropylamin) z.B. Oleoylaminopropyl-dimethylamin (® Mackine 501, Mc Intyre).

Erfindungsgemäß einsetzbare Tenside aus der Gruppe der sauren Phosphorsäureester (Tensidkomponente 2) sind beispielsweise oberflächenaktive Verbindungen mit einer oder mehreren Phosphatgruppen, welche nicht voll verestert sind und worin die veresterten Säurereste mit Verbindungen aus der folgenden Gruppe von Alkoholkomponenten verestert sind:
(a2) Alkanole (z.B. Isoalkanole) mit beispielsweise 1 bis 22 C-Atomen, vorzugsweise 1 bis 12 C-Atomen, besonders 4 bis 12 oder 4 bis 8 C-Atomen, oder unsubstituierte oder substituierte Cycloalkanole mit vorzugsweise 5 bis 12 C-Atomen, z.B. Cyclohexanol, Alkylcyclohexanole, Cyclopentanol;
(b2) oxalkylierte Alkanole mit bis zu 24 C-Atomen im Alkylrest und 1 bis 150 Alkylenoxy-einheiten im Alkylenoxy- bzw. Polyalkylenoxy-teil, vorzugsweise solche mit 4 bis 22 C-Atomen, insbesondere 10 bis 20 C-Atomen im Alkylrest und 1 bis 60, insbesondere 3 bis 30 Alkylenoxy-einheiten im Alkylenoxy- bzw. Polyalkylenoxy-teil,
(c2) Phenol oder oxalkyliertes Phenol, wobei der Phenylrest jeweils unsubstituiert oder durch einen, zwei oder drei Alkylreste mit vorzugsweise jeweils 4 bis 12 C-Atomen oder durch einen, zwei oder drei Aryl- oder Arylalkylreste mit 6 bis 12 C-Atomen substituiert ist, und im oxalkylierten Fall 1 bis 150 Alkylenoxy-einheiten im Alkylenoxy- bzw. Polyalkylenoxy-teil aufweist, vorzugsweise oxalkyliertes Phenol mit 1 bis 20 Alkylenoxyeinheiten oder oxalkyliertes Phenol, das durch 1 bis 3 Alkylreste mit jeweils 4 bis 12 C-Atomen substituiert ist und 1 bis 60, insbesondere 4 bis 30 Alkylenoxy-einheiten aufweist, oder oxalkyliertes Phenol, das durch einen, zwei oder drei Aryl- oder Arylalkylreste mit 6 bis 12 C-Atomen substituiert ist und 1 bis 100, insbesondere 10 bis 30 Alkylenoxyeinheiten aufweist, und
(d2) oxalkylierte Alkylamine beispielsweise mit bis zu 24 C-Atomen im Alkylteil und 1 bis 150 Alkylenoxyeinheiten in den Polyalkylenoxyteilen, z.B. so daß die Tenside phosphatierte alkoxylierte Alkylamine wie ethoxylierte C₈-C₂₂-Fettamine darstellen.

Bei den jeweils genannten Alkylenoxy-einheiten sind (C₁-C₄)Alkylenoxy-einheiten, beispielsweise Ethylenoxy, Propylenoxy und Butylenoxy-einheiten, insbesondere Ethylenoxyeinheiten bevorzugt.

Bevorzugt sind als saure Phosporsäureester insbesondere beispielsweise zu verwenden:
phosphatierte ethoxylierte längerkettige Alkohole oder Fettalkohole mit 10 bis 18 C-Atomen im Alkylrest und 1 bis 30 Ethylenoxy-einheiten im Polyethylenoxy-teil, beispielsweise Rhodafac RS 710® (Rhone-Poulenc), Crodafos T 10 A® (Croda) oder Crafol AP 240® (Henkel) oder Servoxyl VPDZ 20/100® (Hüls),
phosphatiertes ethoxyliertes Phenol oder Alkylphenol mit 4 bis 12 C-Atomen im Alkylrest und jeweils 1 bis 30 Ethylenoxy-einheiten im Polyethylenoxy-teil, beispielsweise Rhodafac PA/19® (Rhone-Poulenc),
phosphatiertes ethoxyliertes Tristyrylphenol und 1 bis 150 Ethylenoxy-einheiten im Polyethylenoxy-teil, beispielsweise Soprophor 3D33® (Rhone-Poulenc),

Daneben kann das Tensidsystem weitere Tenside enthalten, ohne daß die genannten vorteilhaften Eigenschaften des Tensidsystems verlorengehen. Optional können so beispielsweise noch anionogene Tenside wie Alkylpolyglykolethersulfate oder Alkylpolyglykolethercarboxylate in die Formulierungen eingearbeitet werden. Beispiele für derartige anionogene Tenside sind Genapol LRO® (Clariant) bzw. Marlowet 4538® (Hüls).

Mit den erfindungsgemäßen Tensidsystemen lassen sich nun überraschenderweise optisch transparente, thermodynamisch stabile und flüssige pestizide Mikroemulsionen von wasserlöslichen Wirkstoffen wie Glyphosate(salzen) und/oder Glufosinate-ammonium in Kombination mit in Wasser unlöslichen Wirkstoffen vom Typ (b) wie beispielsweise Oxyfluorfen, Diclofop-methyl, Fenoxaprop-ethyl oder Fenoxaprop-P-ethyl herstellen.

Darüberhinaus beeinflußt das erfindungsgemäße Tensidsystem die herbizide Wirkung von wasserlöslichen Wirkstoffen wie Glyphosate(salzen) oder von Glufosinate-ammonium in Kombination mit den Wirkstoffen vom Typ (b) in günstiger Weise.

Das erfindungsgemäße Tensidsystem gestattet demgemäß auch die Mikroemulgierung anderer als der hier aufgeführten Ölphasen bzw. in Öl löslichen Wirkstoffe. Zudem sind mit ihm auch Mikroemulsionen mit anderen als den erwähnten in Wasser löslichen Wirkstoffen zugänglich, beispielsweise mit Herbiziden aus der Gruppe der Diphenylether, Carbamate, Thiocarbamate, Halogenacetanilide, Phenoxyphenoxycarbonsäurederivate sowie Heteroaryloxyphenoxyalkancarbonsäurederivate, wie Chinolyloxy-, Chinoxalyloxy-, Pyridyloxy-, Benzoxalyloxy- und Benzthiazolyloxyphenoxyalkancarbonsäureester, welche in der Regel eine geeignete Löslichkeit in der Ölphase aufweisen.

Teilweise sind aber auch öl-lösliche, in Wasser praktisch unlösliche Wirkstoffe aus der Gruppe geeignet, welche normalerweise Wirkstoffe unterschiedlicher Löslichkeiten enthält, z.B. Wirkstoffe aus der Gruppe der Cyclohexandionabkömmlinge, Imidazolinone, Pyrimidyloxypyridincarbonsäurederivate, Pyrimidyloxy-benzoesäure-derivate, Sulfonylharnstoffe, Triazolopyrimidinsulfonamid-derivate sowie S-(N-Aryl-N-alkylcarbamoylmethyl)-dithiophosphorsäureester.

Entsprechend können auch Wirkstoffe aus der Gruppe der Safener, Wachstumsregulatoren, Insektizide und Fungizide als Komponente (b) bzw. bei guter Wasserlöslichkeit als Komponenten (a) in Frage kommen.

Die leichte Übertragbarkeit auf andere Kombinationen aus in Wasser unlöslichen und in Wasser löslichen Wirkstoffen zeigt die Flexibilität des Tensidsystems auf. Auch diese Kompatibilität mit anderen Öl- bzw. Wasser-Phasen stellt einen erheblichen praktischen Vorteil der beschriebenen Komponentenmischungen dar.

Aus den genannten Gründen sind ein besonderer Gegenstand der Erfindung Tensidsysteme für flüssige pestizide Mittel, die
(a) eine oder mehrere Verbindungen der Formel (1) oder deren Salze 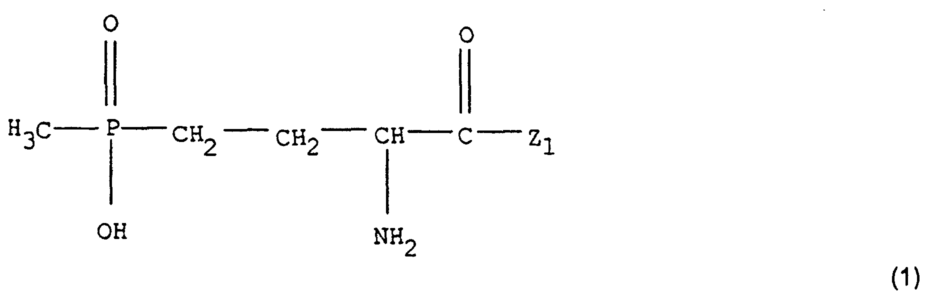 worin
   Z₁ einen Rest der Formel -OM, -NHCH(CH₃)CONHCH(CH₃)CO₂M oder -NHCH(CH₃)CONHCH[CH₂CH(CH₃)₂]CO₂M und M=H oder ein Salz bildendes Kation bedeuten, und/oder eine oder mehrere Verbindungen der Formel (2) oder deren Salze 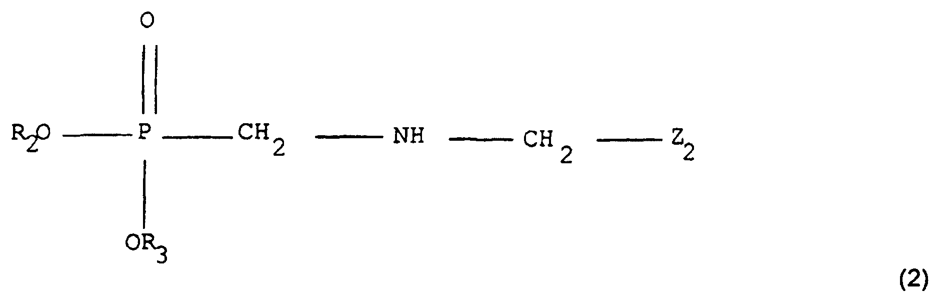 worin
   Z₂ einen Rest der Formel CN oder CO₂R₁ bedeutet, in dem R₁ = Q oder ein Salz bildendes Kation ist und dabei Q = H, Alkyl, Alkenyl, Alkoxyalkyl oder C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, und
   R₂,R₃ jeweils unabhängig voneinander H, Alkyl, C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, oder Biphenyl oder ein Salz bildendes Kation bedeuten,
   und/oder einen oder mehrere Verbindungen der Formel (3) 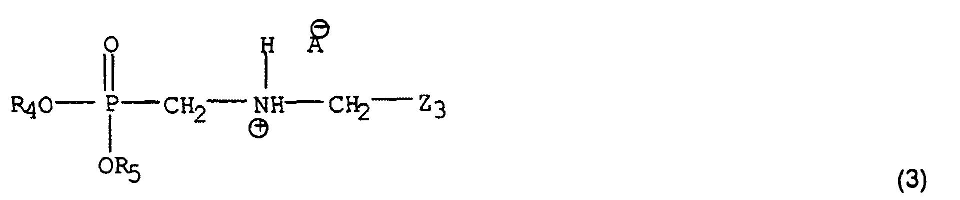 worin
   Z₃ einen Rest CN oder CO₂Q' bedeutet, in dem Q' = H, Alkyl, Alkenyl, Alkoxyalkyl oder C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, und
   R₄ und R₅ jeweils H, Alkyl oder C₆-C₁₀C-Aryl, das unsubstituiert oder substituiert ist, vorzugsweise unsubstituiert oder durch einen oder mehrere Reste aus der Gruppe Alkyl, Alkoxy, Halogen, CF₃, NO₂ und CN substituiert ist, und A ein Salz bildendes Anion bedeutet, und
(b) gegebenenfalls einen oder mehrere in Wasser unlösliche Wirkstoffe enthalten, insbesondere aus der Gruppe der bevorzugt genannten Herbizide,
(c) gegebenenfalls ein oder mehrere organische Lösungsmittel,
(d) das genannte Tensidsystem aus einem oder mehreren basischen Kotensiden und einem oder mehreren Tensiden aus der Gruppe der sauren Phosphorsäureester
enthalten.

In den Formeln (1) bis (3) und den im folgenden verwendeten Formeln können die Reste Alkyl, Alkoxy sowie die entsprechenden substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 4 C-Atomen bzw. bei ungesättigten Gruppen mit 2 bis 4 C-Atomen, bevorzugt. Alkylreste, auch in den zusammengesetzten Bedeutungen wie Alkoxy (Alkanolen) usw., bedeuten, z.B. Methyl, Ethyl, n- oder i-Propyl, n-, i-, t- oder 2-Butyl, Pentyl, Hexyl, wie n-Hexyl, i-Hexyl und 1,3-Dimethylbutyl, Heptyl, wie n-Heptyl, 1-Methylhexyl, 2-Ethyl-hex-1-yl und 1,4-Dimethylpentyl.

Halogen bedeutet beispielsweise Fluor, Chlor, Brom oder Iod, Haloalkyl, -alkenyl und-alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl₂, CCl₃, CHCl₂, CH₂CH₂Cl; Haloalkyl ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Aryl bedeutet einen monocyclischen, carbocyclischen aromatischen Ring, der im substituierten Fall auch ein bi- oder polycyclisches aromatisches System einschließt, das mindestens einen aromatischen Ring und gegebenenfalls weitere aromatische Ringe oder teilungesättigte oder gesättigte Ringe enthält; Aryl ist beispielsweise Phenyl, Naphthyl, Tetrahydronaphthyl, Indenyl, Indanyl, Pentalenyl, Fluorenyl und ähnliches, vorzugsweise Phenyl;
Aryl bedeutet ein mono-, bi- oder polycyclisches aromatisches System, beispielsweise Phenyl, Naphthyl, Tetrahydronaphthyl, Indenyl; Indanyl, Pentalenyl, Fluorenyl und ähnliches, vorzugsweise Phenyl; Aryloxy bedeutet vorzugsweise ein dem genannten Arylrest entsprechender Oxy-Rest, insbesondere Phenoxy.

Substituierte Reste, wie z. B. substituiertes Alkyl, Aryl oder Phenyl bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Cyano, Azido, Alkoxycarbonyl, Alkylcarbonyl, Formyl, Carbamoyl, Mono- und Dialkylaminocarbonyl, substituiertes Amino wie Acylamino, Mono- oder Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, C₁-C₄-Alkyl, vorzugsweise Methyl oder Ethyl, C₁-C₄-Haloalkyl, vorzugsweise Trifluormethyl, C₁-C₄-Alkoxy, vorzugsweise Methoxy oder Ethoxy, C₁-C₄-Haloalkoxy, Nitro und Cyano. Besonders bevorzugt sind dabei die Substituenten Methyl, Methoxy und Chlor.

Bevorzugte Verbindungen der Formeln (1), (2) und (3) sind solche, in denen Z₁ einen Rest der Formel -OM und M=H oder ein Salz bildendes Kation bedeuten,
Z₂ einen Rest der Formel CN oder CO₂R₁ bedeutet, in dem R₁ = Q oder ein Salz bildendes Kation ist und dabei Q = H, (C₁-C₁₂)Alkyl, (C₂-C₁₂)Alkenyl, (C₁-C₆)Alkoxy-(C₁-C₆)alkyl oder (C₆-C₁₀)Aryl, das unsubstituiert oder substituiert ist und vorzugsweise unsubstituiert oder durch einen oder mehrere Reste aus der Gruppe (C₁-C₄)Alkyl, (C₁-C₄)Alkoxy, Halogen, CF₃, NO₂ und CN substituiert ist,
R₂, R₃ jeweils unabhängig voneinander H, (C₁-C₄)Alkyl, (C₁-C₁₀)Aryl, das unsubstituiert oder substituiert ist und vorzugsweise unsubstituiert oder durch einen oder mehrere Reste aus der Gruppe (C₁-C₄)Alkyl, (C₁-C₄)Alkoxy, Halogen, CF₃, NO₂ und CN substituiert ist, oder Biphenyl oder ein Salz bildendes Kation bedeuten,
Z₃ einen Rest CN oder CO₂Q' bedeutet, in dem Q' = H, (C₁-C₁₂)Alkyl, (C₂-C₁₂)Alkenyl, (C₁-C₆)Alkoxy-(C₁-C₆)alkyl oder (C₆-C₁₀)Aryl, das unsubstituiert oder substituiert ist und vorzugsweise unsubstituiert oder durch einen oder mehrere Reste aus der Gruppe (C₁-C₄)Alkyl, (C₁-C₄)Alkoxy, Halogen, CF₃, NO₂ und CN substituiert ist,
R₄ und R₅ jeweils H, (C₁-C₄)Alkyl oder (C₆-C₁₀)Aryl, das unsubstituiert oder substituiert ist, vorzugsweise unsubstituiert oder durch einen oder mehrere Reste aus der Gruppe (C₁-C₄)Alkyl, (C₁-C₄)Alkoxy, Halogen, CF₃, NO₂ und CN substituiert ist, bzw.
A ein Salz bildendes Anion bedeutet, wie z.B. Halogenid-, Sulfat-, Nitrat-, Phosphat-, Carbonat-, Hydrogencarbonat-anionen oder Säureanionen von Carbonsäuren und anderen organischer Säuren.

Die Verbindungen der Formel (1) enthalten ein asymmetrisches C-Atom. Das L-Enantiomere wird dabei als biologisch aktives Isomer angesehen. Die Formel (1) umfaßt daher alle Stereoisomeren und deren Gemische, insbesondere das Racemat und das jeweils biologisch wirksame Enantiomer. Beispiele für Wirkstoffe der Formel (1) sind folgende:
◆ Glufosinate und dessen Ammoniumsalz in racemischer Form,
◆ das L-Enantiomer von Glufosinate und dessen Ammoniumsalz,
◆ Bilanafos/Bialaphos, d.h. L-2-Amino-4-[hydroxy(methyl)phosphinoyl]-butanoyl-Lalaninyl-L-alanin und dessen Natriumsalz.

Das Racemat von Glufosinate-ammonium wird alleine üblicherweise in Dosierungen ausgebracht, die zwischen 200 und 1000 g a.i./ha (=Gramm Aktivsubstanz pro Hektar) liegen. Glufosinate-ammonium ist in diesen Dosierungen vor allem dann wirksam, wenn es über grüne Pflanzenteile aufgenommen wird; siehe "The Pesticide Manual" 10th Edition, British Crop Protection Council 1994, S. 541. Glufosinate-ammonium wird vorwiegend zur Bekämpfung von Unkräutern und Ungräsem in Plantagenkulturen und auf Nichtkulturland sowie mittels spezieller Applikationstechniken auch zur Zwischenreihenbekämpfung in landwirtschaftlichen Flächenkulturen wie Mais, Baumwolle u.a. eingesetzt. Zunehmende Bedeutung gewinnt auch der Einsatz in transgenen Kulturen, welche gegenüber dem jeweiligen Wirkstoff resistent oder tolerant sind.

Da der Wirkstoff Glufosinate-ammonium im Boden mikrobiell innerhalb weniger Tage abgebaut wird, ist keine Dauerwirkung zu beobachten. Ähnliches gilt auch für den verwandten Wirkstoff Bilanafos/Bialaphos; siehe "The Pesticide Manual" 10th Edition, British Crop Protection Council 1994, S. 98.

Bei den Verbindungen der Formeln (2) und (3) handelt es sich um N-(Phosphonoalkyl)-glycin und damit um Derivate der Aminosäure Glycin. Die herbiziden Eigenschaften von N-(Phosphonomethyl)-glycin ("Glyphosate") sind z. B. in der US-Patentschrift Nr. 3799758 beschrieben. In der Regel wird Glyphosate in Pflanzenschutzformulierungen in Form der wasserlöslichen Salze verwendet, wobei im Zusammenhang mit der vorliegenden Erfindung vor allem das Isopropylammoniumsalz ("IPA-Glyphosat") von Bedeutung ist.

Das erfindungsgemäße Tensidsystem (Komponentenmischung (d)) eignet sich generell zur Mikroemulgierung von Ölphasen in Wasser bzw. - bei entsprechender Auswahl der Einzelkomponenten - von wäßrigen Phasen in Öl. Je nach Zusammensetzung sind so entweder mit Wasser oder mit Öl unter Erhalt der mizellaren Struktur verdünnbare Mikroemulsionen zugänglich. In Abwesenheit der die öl-löslichen Wirkstoffe vom Typ (b) enthaltenden Öl-Phasen ergeben sich ferner dünnflüssige wäßrige Lösungen der unter (a) beschriebenen Wirkstoffe.

Ein bevorzugter Gegenstand der Erfindung sind deshalb die Öl-in-Wasser-Mikroemulsionen mit den Komponenten (a) bis (d), insbesondere solche mit einem oder mehreren in einem organischen Lösungsmittel gelösten Diphenylether, einem Herbizid aus der Gruppe der Azol-Herbizide, Phenoxyphenoxycarbonsäurederivate und Heteroaryloxyphenoxycarbonsäurederivate.

Dabei umfaßt die Bezeichnung "Diphenylether" chemische Verbindungen aus der Gruppe der Diphenylether-Herbizide, ihrer Äquivalente, Metabolite, Salze, Ester sowie Derivate. Diphenylether-Herbizide bestehen aus zwei substituierten Benzolringen, die über ein Sauerstoffatom verbunden sind. Sie werden üblicherweise im Vor- oder Nachlaufverfahren zur Bekämpfung von Unkräutern und Ungräsem eingesetzt. Je nach Substitution und dem für die herbizide Wirkung relevanten Licht-Eintrag unterscheidet man zwischen in Position 2,4- oder 2,4,6-substituierten Diphenylethern und an Position 3- oder 3,5-substituierten Diphenylethern.

Zu der Gruppe der Diphenylether-Herbizide gehören insbesondere Acifluorfen und die entsprechenden Alkalimetallsalze, Aclonifen, Bifenox, Chlomethoxyfen, Fluoroglycofen, Fomesafen, Lactofen, Nitrofen, Oxyfluorfen sowie Mischungen dieser Verbindungen.

Die genannten Verbindungen sind z. B. in "The Pesticide Manual" 10th Edition, British Crop Protection Council 1994 und dort zitierter Literatur beschrieben und als Herbizide vom Typ der Protoporphyrinogen-Oxidase-Inhibitoren bekannt.

Die Bezeichnung "Azol-Herbizide" umfaßt chemische Verbindungen, die aus einem oder mehreren substituierten Heterocyclen mit einem oder mehreren Stickstoffatomen bestehen. Je nach Zahl der Stickstoffatome im zugrundeliegenden Heterocyclus spricht man dann von Mono-, Di- oder auch Triazol-Herbiziden.
Zu der Gruppe der "Azol-Herbizide" gehört insbesondere Oxadiazon.

Auch diese Verbindung ist in "The Pesticide Manual" 10th Edition, British Crop Protection Council 1994 und dort zitierter Literatur beschrieben und als Herbizid vom Typ der Protoporphyrinogen-Oxidase-Inhibitoren bekannt.

Geeignete öl-lösliche Herbizide aus der Gruppe Herbizide vom Typ der Penoxyphenoxy- und Heteroaryloxyphenoxycarbonsäurederivate sind z.B.
a) Phenoxy-phenoxycarbonsäure-derivate, z.B.
   - 2-(4-(2,4-Dichlorphenoxy)-phenoxy)-propionsäuremethylester (Diclofop-methyl)
   - 2-(4-(4-Cyano-2-fluorphenoxy)-phenoxy)-propionsäurebutylester und dessen 2-(R)-Enantiomer (Cyhalofop-butyl)
   - 2-(4-(2-Chlor-4-trifluormethylphenoxy)-phenoxy)-propionsäuremethylester (s. DE-A-2433067)
   - 2-(4-Fluor-4-trifluormethylphenoxy)-phenoxy)-propionsäuremethyester (s. US-A-4808750)
   - 2-(4-(4-Trifluormethylphenoxy)-phenoxy)-propionsäuremethylester (s. DE-A-2433067),
b) "Einkemige" Heteroaryloxy-phenoxy-alkancarbonsäurederivate, z.B.
   - 2(4-(3,5-Dichlorpyridyl-2-oxy)-phenoxy)-propionsäureethylester (s. EP-A-2925)
   - 2-(4-(3-Chlor-5-trifluormethyl-2-pyridyloxy)-phenoxy-propionsäuremethylester (s. EP-A-3890),
   - 2-(4-(3-Chlor-5-trifluormethyl-2-pyridyloxy)-phenoxy)-propionsäuremethylester und dessen (R)-Enantiomer (Haloxyfop-methyl bzw. Haloxyfop-Pmethyl s. EP-A-3890) und der entsprechende Ethoxyethylester (Haloxyfopetotyl bzw. Haloxyfop-P-etotyl),
   - 2-(4-(5-Chlor-3-fluor-2-pyridyloxy)-phenoxy)-propionsäurepropargylester und dessen (R)-Enantiomer (EP-A-191736, Clodinafop-propargyl),
   - 2-(4-(5-Trifluormethyl-2-pyridyloxy)-phenoxy-propionsäurebutylester und dessen (R)-Enantiomer (Fluazip-butyl bzw. Fluazifop-P-butyl),
c) "Zweikernige" Heteroaryloxy-phenoxy-alkancarbonsäurederivate, z.B.
   - (R)-2-(4-(6-chlor-2-chinoxalyloxy)-phenoxy)-propionsäure-methylester und -ethylester (Quizalofop-P-methyl bzw. -ethyl) oder der entsprechende 2-Isopropylidenamino-oxyethyl-ester (Propaquizafop),
   - 2-(4-(6-Chlorbenzoxazol-2-yl-oxy)-phenoxy)-propionsäureethylester (Fenoxaprop-ethyl), dessen (R)-Enantiomer (Fenoxaprop-P-ethyl),
   - 2-(4-(6-Chlorchinoxalyloxy)-phenoxy-propionsäure-tetrahydrofur-2-ylmethylester und dessen (R)-Enantiomer (s. EP-A- 323 727).

Die mit dem "Common-name" genannten Verbindungen sind auch in "The Pesticide Manual" 11. Auflage, British Crop Protection Council 1997 beschrieben und meist als Inhibitoren der Fettsäurebiosynthese in Pflanzen bekannt.

Die Gewichtsverhältnisse (a):(b) der kombinierten Wirkstoffe vom Typ (a) und (b) können innerhalb weiter Grenzen variieren und hängen vor allem auch von der Wirksamkeit bzw. der üblichen Aufwandmenge der eingesetzten Wirkstoffe ab. Die Gewichtsverhältnisse liegen in der Regel zwischen 1000:1 und 1:1, vorzugsweise 100:1 bis 1:1, insbesondere 50:1 bis 1:1, und im Falle der Herbizide der Formel (1), (2) oder (3) und Diphenylether-Herbiziden vorzugsweise zwischen 10:1 und 1:1. Für Kombinationen von Diphenylether-Herbiziden mit Herbiziden vom Typ (a), insbesondere Glufosinate-ammonium, sind folgende Gewichtsverhältnisse (a):(b) bevorzugt:
◆ mit Acifluorfen, 10:1 bis 2:1, insbesondere 8:1 bis 3:1.
◆ mit Bifenox, 10:1 bis 2:1, insbesondere 8:1 bis 3:1.
◆ mit Fluoroglycofen, 100:1 bis 10:1, insbesondere 50:1 bis 10:1.
◆ mit Fomesafen, 10:1 bis 2:1, insbesondere 8:1 bis 3:1.
◆ mit Lactofen, 10:1 bis 2:1, insbesondere 8:1 bis 3:1.
◆ mit Oxyfluorfen, 10:1 bis 2:1, insbesondere 8:1 bis 3:1.

In der Regel sind Aufwandmengen von 100 bis 600 g a.i./ha Herbizid vom Typ (a), vorzugsweise Glufosinate-ammonium, und von 50 bis 150 g a.i./ha der Wirkstoffe vom Typ (b), insbesondere Oxyfluorfen oder Lactofen, einsetzbar.

Die optimale Wahl der Gewichtsverhältnisse und der Aufwandmengen insbesondere abhängig vom Entwicklungsstadium der jeweiligen Unkräuter oder Ungräser, der vorherrschenden Unkrautspektren, Umweltfaktoren und Klimabedingungen, so daß die o.a. Gewichtsverhältnisse und Aufwandmengen im Einzelfall zu überprüfen sind. Die Aufwandmenge der jeweiligen Herbizide bei der kombinierten Anwendung liegt wesentlich unterhalb der Aufwandmengen für die Einzelapplikation bei gleicher Herbizidwirkung, so daß thermodynamisch stabile Formulierungen, in denen beide Wirkstoffkomponenten enthalten sind, eine besonders hohe biologische Wirksamkeit - bei reduziertem Wirkstoffgehalt - ermöglichen.

Im Zusammenhang mit der vorliegenden Erfindung bezeichnet der Begriff "organische Lösungsmittel" (Komponente (c)) beispielsweise unpolare Lösungsmittel, polare protische oder aprotische polare Lösungsmittel und deren Mischungen. Beispiele für Lösungsmittel im Sinne der Erfindung sind
◆ aliphatische oder aromatische Kohlenwasserstoffe, wie z.B. Mineralöle bzw. Toluol, Xylole und Naphthalinderivate;
◆ halogenierte aliphatische oder aromatische Kohlenwasserstoffe wie Methylenchlorid bzw. Chlorbenzol;
   Ether wie Diethylether, Tetrahydrofuran (THF), Dioxan, Alkylenglykolmonoalkyether und -dialkylether wie z.B. Propylenglykolmonomethylether, Propylenglykolmonoethylether, Ethylenglykolmonomethylether oder -monoethylether, Diglyme und Tetraglyme;
◆ Amide wie Dimethylformamid (DMF), Dimethylacetamid, Dimethylcaprylamid, Dimethylcaprinamid (® Hallcowide) und N-Alkylpyrrolidone;
◆ Ketone wie Aceton;
◆ Ester auf Basis von Glycerin und Carbonsäuren wie Glycerinmono-, di- und triacetat,
◆ Phthalsäureester;
◆ Lactame;
◆ Kohlensäurediester;
◆ Nitrile wie Acetonitril, Propionitril, Butyronitril und Benzonitril;
◆ Sulfoxide und Sulfone wie Dimethylsulfoxid (DMSO) und Sulfolan;
◆ Öle, z. B. auf pflanzlicher Basis wie Maiskeimöl und Rapsöl.

Häufig eignen sich auch Kombinationen verschiedener Lösungsmittel, die zusätzlich Alkohole wie Methanol, Ethanol, n- und i-Propanol, n-, i-, t- und 2-Butanol enthalten.

Im Falle der einphasigen wäßrigen-organischen Lösungen kommen die ganz oder weitgehend wassermischbaren Lösungsmittel oder Lösungsmittelgemische in Frage.

Für die Herstellung der Mikroemulsionen kommen essentiell die Lösungsmittel in Frage, die hauptsächlich Bestandteil der organischen Phase werden, d. h. die mit Wasser nicht oder wenig mischbaren Lösungsmittel bzw. Lösungsmittelgemische. Daneben können gegebenenfalls auch in Wasser partiell oder unbegrenzbar lösliche Lösungsmittel zugemischt werden.

Bevorzugte organische Lösungsmittel im Sinne der vorliegenden Erfindung sind aromatische Lösungsmittel wie Toluol, o-, m- oder p-Xylol und deren Gemische, 1-Methylnaphthalin, 2-Methylnaphthalin, 6-16C-Aromatengemische wie z.B. die Solvesso® -Reihe (ESSO) mit den Typen Solvesso® 100 (Kp. 162-177 °C), Solvesso® 150 (Kp. 187-207 °C) und Solvesso® 200 (Kp. 219-282 °C), Phthalsäure-(1-12C)Alkylester, speziell Phthalsäure(4-8C)Alkylester, mit Wasser nicht mischbare Ketone wie beispielsweise Cyclohexanon oder Isophoron oder 6-20C-Aliphaten, die linear oder cyclisch sein können, wie die Produkte der Shellsol® -Reihe, Typen T und K oder BP-n Paraffine, Ester wie Glycerintriacetat sowie die polaren organischen Lösungsmittel N-Methylpyrrolidon und Dowanol® PM (Propylenglykol-monomethylether).

Unter den Komponenten, die als Formulierungshilfsmittel in den erfindungsgemäßen Formulierungen zusätzlich enthalten sein können, sind beispielsweise in Wasser unlösliche feste Inertmaterialien, die oft vorteilhaft zur Stabilität der Formulierung beitragen. Dadurch können beispielsweise das Entstehen von Makrophasen, Absetzen von Festphasen u.a. vermieden oder verzögert werden. Geeignete Inertmaterialien sind dabei in der Ölphase lösliche Harze oder harzähnliche Stoffe natürlichen oder synthetischen Ursprungs, z.B. natürliche Harze wie Kollophonium (Rosin, Rosin-Gummi) und Tannin. Die Harze können beispielsweise in Mengen bis zu 30 Gew.-%, vorzugsweise bis zu 20 Gew.-%, insbesondere bis zu 5 Gew.-%, bezogen auf das Gewicht einer Formulierung, zugesetzt werden.

Die zur Herstellung der o.a. Formulierungen notwendigen Hilfsmittel wie insbesondere Tenside und Kotenside sind im Prinzip bekannt und werden beispielsweise beschrieben in: McCutcheon's "Detergents and Emulsifiers Annual", MC Publ. Corp., Ridgewood N.J.; Sisley and Wood, "Encyclopedia of Surface active Agents", Chem. Publ.Co.Inc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C.Hauser-Verlag, München, 4.Auflage 1986, und jeweils dort zitierte Literatur.

Während der chemische "Aufbau" der einzelnen einsetzbaren Komponenten dort hinreichend beschrieben ist, sind Vorhersagen bezüglich der Eigenschaften von Mischungen solcher Komponenten für die Formulierung eines bestimmtes Wirkstoffsystems aus den genannten Handbüchern nicht ableitbar. Dies gilt selbst dann, wenn man Komponentenmischungen einsetzt, mit denen für andere Wirkstoffe bereits Mikroemulsionen erhalten wurden - wie anhand von Tabelle 1 (siehe weiter unten) deutlich wird. Verwendet man im vorliegenden Fall z.B. eine Tensidkombination, mit der für andere Wirkstoffe bereits Mikroemulsionen erhalten und beschrieben wurden (vgl. DE-A-36234910), so findet man für Kombinationen von Glufosinat-Ammonium und Oxyfluorfen gerade keine Mikroemulsionen, sondern instabile mehrphasige Systeme (siehe Beispiele 1 und 4).
Ähnlich verhält es sich, wenn man anstatt des in den Beispielen 1 und 4 als "Ko-Emulgator" verwendeten ethoxylierten Fettamins Verbindungen einsetzt, die in anderem Zusammenhang bereits als Kotenside beschrieben wurden - wie z. B. n-Butanol (Beispiel 2). Auch hier erhält man ein mehrphasiges System anstelle einer Mikroemulsion. Daneben ist die Annahme nicht richtig, daß n-Butanol nur zu hydrophob sei, um im vorliegenden Fall als Kotensid für die Bildung einer Mikroemulsion eingesetzt werden zu können. Wie Beipiel 3 in Tabelle 1 deutlich macht, ergibt sich nämlich auch bei Anhebung des HLB-Wertes keine Mikroemulsion. Ferner beobachtet man im Falle von Glufosinat-Ammonium und Oxyfluorfen für neutralisierte Phosphorsäureester in Gegenwart von basischem Kotensid (Beispiele 5-7) Phasentrennung.

Ausgehend von diesen - keine stabile Mikroemulsion der Wirkstoffkombination (a) und (b) ergebenden - Komponentenmischungen, war folglich nicht zu erwarten, daß mit dem erfindungsgemäßen Tensidsystem Mikroemulsionen für die unter (a) und (b) beschriebenen Wirkstoffe hergestellt werden können. Dies gilt insbesondere für Mischungen aus basischen Kotensiden (kationogene Komponente) und sauren Phosphorsäureestern (anionogene Komponente): Speziell für derartige "katanionogene" Tensid-Mischungen erwartet man nämlich in Wasser unlösliche, kristalline Präzipitate. Daher erscheinen sie a priori als Emulgatoren völlig ungeeignet. Überraschenderweise eignen sie sich jedoch gerade zur Mikroemulgierung der unter (a) und (b) beschriebenen Wirkstoffe besonders gut. Dies wird anhand der in Tabelle 2 (siehe weiter unten) aufgelisteten Beispiele deutlich, die eine Vorstellung von der chemischen Flexibilität der offengelegten Komponentenmischungen vermitteln. So können saure Phosphorsäureester unterschiedlicher chemischer Provinienz eingesetzt werden wie phosphatierte ethoxylierte Fettalkohole verschiedener Fettalkohol-Basis (Beispiel I und Beispiel III), ethoxylierte Nonylphenolphosphate (Beispiel IV) oder auch ethoxylierte Tristyrylphenolphosphate (Beispiel V). Offensichtlich spielt auch der Ethoxylierungsgrad der Phosphorsäureester nur eine untergeordnete Rolle wie aus Beispiel II zu ersehen ist. Weiterhin lassen sich als basische Kotenside ebenfalls chemisch verschiedene Komponenten wie Alkylamine auf unterschiedlicher Alkyl-Basis (Beispiel I und Beispiel VI) oder Aminoxethylate (Beispiel VII) verwenden. Beispiel VIII macht schließlich deutlich, daß sogar basische Carbonsäureamide als Kotensid bzw. saure ethoxylierte Arylphosphate als Tensid einsetzbar sind.

Die mögliche chemische Vielfalt erlaubt die optimale Anpassung des eingesetzten Tensidsystems an die im Einzelfall zu erfüllenden technischen Anforderungen, wobei jedoch zu berücksichtigen ist, daß Mischungen gemäß Komponente (d) genau dann besonders effektiv sind, wenn sie überschüssiges basisches Kotensid (Beispiele I-VII, IX-XIV) oder überschüssigen sauren Phosphorsäureester (Beispiel VIII) enthalten. Bevorzugte Molverhältnisse (bezogen auf Äquivalente der aciden bzw. basischen Gruppen) der Komponenten saurer Phosphorsäureester:basisches Kotensid sind insbesondere 1:1,01-1:100 bzw. 1:0,01-1:0,99, bevorzugt ein Verhältnis von 1:2 bis 1:4, beispielsweise ca. 1:2, 1:3 oder 1:4, oder von 1:0,5 bis 1:0,25, beispielsweise 2:1, 3:1 oder 4:1. Folglich sind insbesondere Mischungen, die die beiden Tensidkomponenten (1) und (2) in nicht-äquimolaren Mengen enthalten, zur Mikroemulgierung besonders gut geeignet. Vorzugsweise ist dabei der pH-Wert der Formulierung so einzustellen, daß es nicht zur oben beschriebenen Phasentrennung kommt - im Falle von Glufosinat-Ammonium vorzugsweise im Bereich nahe pH = 7. Liegt der pH-Wert nicht von vornherein im Neutralen wie im Falle der Beispiele VII und VIII, so kann zu seiner Einstellung z.B. Essigsäure verwendet werden (Beispiele I-VI, IX, X und Xll-XIV).

Mit anionogenen Tensiden wie Alkylpolyglykolethersulfaten oder -carboxylaten allein, d. h. ohne das erfindungsgemäße Tensidsystem, werden keine Mikroemulsionen für Mischungen aus (a) und (b) erhalten, weil sich ihre Gegenwart "destabilisierend" auswirkt. Der alleinige Einsatz derartiger anionogener Tenside ergibt für Mischungen aus (a) und (b) in der Regel thermodynamisch instabile Systeme wie die in DE-A-19501986 beschriebenen Makroemulsionen. Überraschenderweise erhält man jedoch auch für Alkylpolyglykolethersulfate bzw. Alkylpolyglykolether-carboxylate in der Kombination mit ausreichend hydrophoben primären N-Alkylaminen als basischer Komponente und sauren Phosphorsäureestern als anionogener Komponente gemäß Komponentenmischung (d) thermodynamisch stabile Fertigformulierungen (Beispiele IX bzw. X).

Wie Beispiel XI weiterhin zu entnehmen ist, können die unter (d) beschriebenen Komponentenmischungen auch zur Mikroemulgierung von in Wasser unlöslichen Wirkstoffen wie Oxyfluorfen in Gegenwart von Glyphosate eingesetzt werden.

In den Patentschriften US-A-5338762, US-A-5326789, US-A-5317042, US-A-5298529, US-A-5300529 und WO-A-9213454 sind N-Alkylpyrrolidone als Inhaltsstoffe von pestiziden Mikroemulsionen beschrieben. Das erfindungsgemäße Tensidsystem (d) gestattet die Mikroemulgierung von Kombinationen der Wirkstoffe (a) und (b) jedoch auch unabhängig von der Anwesenheit des Inhaltsstoffes N-Methylpyrrolidon (NMP). Dies wird an Beispiel XII unmittelbar deutlich.

Mikroemulsionen bzw. mizellare Lösungen, die entsprechend der vorliegenden Erfindung hergestellt werden, enthalten Wasser. Ein Teil des Wassers rührt dabei von dem in kommerziell erhältlichen Tensiden bzw. Tensidmischungen vorhandenen Restwasser her, ein anderer Teil entstammt der wäßrigen Lösung der Herbizide vom Typ (a); um mit den beschriebenen Tensidmischungen tatsächlich eine Mikroemulsion zu erhalten, ist in der Regel zusätzliches Wasser erforderlich.

Das erfindungsgemäße Tensidsystem (d) ergibt auch in Abwesenheit einer organischen Phase bzw. in Gegenwart polarer unbegrenzt mit Wasser mischbarer Lösungsmittel wie beispielsweise N-Methylpyrrolidon (NMP) in Kombination mit Wirkstoffen vom Typ (a) einphasige stabile wäßrige Lösungen. Dies wird anhand der Beispiele in Tabelle 3 deutlich.

Mit Hilfe der Komponentenmischungen (d) lassen sich demnach vorzugsweise flüssige Zubereitungen von Glufosinate bzw. Glyphosate oder deren Salzen bzw. von anderen in Wasser gut löslichen Stoffen herstellen, gekennzeichnet durch einen Gehalt an
(a) 1 bis 50 Gew.%, vorzugsweise 5 bis 20 % Wirkstoff vom genannten Typ (a),
(b) 0 bis 70 Gew.%, vorzugsweise 0 bis 10 % Wirkstoff vom genannten Typ (b),
(c) 0 bis 60 Gew.-%, vorzugsweise 0 bis 30 % organische Lösungsmittel,
(d) 3 bis 70 Gew.-%, vorzugsweise 10 bis 40 % der erfindungsgemäßen Komponentenmischung (d) (Tensidsystem),
(e) 0 bis 20 Gew.-%, vorzugsweise 0 bis 15 % weitere anionogene Tenside, wie Alkylpolyglykol-ethersulfate oder -carboxylate,
(f) 0 bis 20 Gew.-%, vorzugsweise 0 bis 15 Gew.-% übliche Formulierungshilfsmittel,
(g) 0,1 bis 60 Gew.-%, vorzugsweise 10 bis 40 % Wasser,
wobei das Gewichtsverhältnis der Herbizide (a) zu den unter (e) genannten Tensiden - bezogen auf die jeweilige waschaktive Substanz (WAS) - vorzugsweise 1:1 bis 1:10, insbesondere 1:1 bis 1:5 beträgt.

Besonders bevorzugt sind dabei Mikroemulsionen mit einem Gehalt an
(a) 5 bis 20 Gew.-% Wirkstoff vom genannten Typ (a),
(b) 1 bis 10 Gew.-% Wirkstoff vom genannten Typ (b),
(c1) 5 bis 30 Gew.-% organische Lösungsmittel, die mit dem Wirkstoff (b) eine Phase bilden,
(c2) 0 bis 30 Gew.-% organische Lösungsmittel, die wasserlöslich sind, wobei der Gesamtanteil and Lösungsmitteln (c1) +(c2) vorzugsweise 5 bis 30 Gew.-% beträgt,
(d) 10 bis 40 Gew.-% der erfindungsgemäßen Komponentenmischung (d), (Tensidsystem),
(e) 0 bis 20 Gew.-%, vorzugsweise 0 bis 15 % weiteren anionogenen Tenside wie Alkylpolyglykol-ethersulfate oder -carboxylate,
(f) 0 bis 20 Gew.%, vorzugsweise 0 bis 10 Gew.-% üblichen Formulierungshilfsmitteln,
(g) 10 bis 40 Gew.-% Wasser.

Weiterhin bevorzugt sind auch wäßrige einphasige Lösungen der Herbizide (a) mit einem Gehalt an dem erfindungsgemäßen Tensidsystem (d). Diese Lösungen stellen eine günstige Anwendungsform der Herbizide (a) dar. Bevorzugt sind dabei herbizide wäßrige einphasige Lösungen mit einem Gehalt an
(a) 1 bis 50 Gew.-%, vorzugsweise 5 bis 20 Gew.-% Wirkstoff vom genannten Typ (a),
(d) 3 bis 70 %, vorzugsweise 5 bis 50 % der erfindungsgemäßen Komponentenmischung (d) (Tensidsystem),
(c) 0 bis 40 Gew.-% ohne Phasentrennung zumischbare organische Lösungsmittel,
(e) 0 bis 20 Gew.-%, vorzugsweise 0 bis 15 % weitere anionogene Tenside wie Alkylpolyglykol-ethersulfate oder -carboxylate,
(f) 0 bis 20 Gew.-%, vorzugsweise 0 bis 15 Gew.-% übliche Formulierungshilfsmittel,
(g) 10 bis 40 % Wasser.
Die zur Herstellung der wäßrigen einphasigen Lösung zumischbaren Lösungsmittel sind vor allem unbegrenzt oder weitgehend mit Wasser mischbare organische organische Lösungsmittel wie beispielsweise N-Methylpyrrolidon (NMP), Dimethylformamid (DMF), Dimethylacetamid (DMA) oder Propylenglykolmonomethylether.

Übliche Formulierungshilfsmittel (f) sind beispielsweise die genannten Inertmaterialien, Frostschutzmittel, Verdunstungshemmer, Konservierungsmittel, Farbstoffe, Entschäumer u. a.; bevorzugte Formulierungshilfsmittel (f) sind
◆ die in Wasser unlöslichen Inertmaterialien, (z.B. öl-lösliche Harze) bis zu 30 Gew.-%.
◆ Frostschutzmittel und Verdunstungshemmer wie Glycerin oder Ethylenglykol, z.B. in einer Menge von 2 bis 10 Gew.-% und
◆ Konservierungsstoffe, z.B. Mergal K9N® (Riedel) oder Cobate C® ,
◆ Entschäumer wie ® Fluowet PL 80 (Clariant) in Mengen von 0,001 bis 1 Gew.-% in den üblichen Anwendungskonzentrationen für die jeweils speziell eingesetzten Mittel.

Die erfindungsgemäßen flüssigen Formulierungen können nach im Prinzip üblichen Verfahren hergestellt werden, d. h. durch Vermischen der Komponenten unter Rühren, Schütteln oder mittels statischer Mischverfahren. Die erhaltenen flüssigen Formulierungen sind stabil und gut lagerfähig.
Darüberhinaus weisen die flüssigen Formulierungen vielfach günstige anwendungstechnische Eigenschaften auf. Wie beispielsweise aus Tabelle 4 (siehe weiter unten) ersichtlich, liegt die meßbare herbizide Wirkung der nach Rezeptur I in Form einer Mikroemulsion erfindungsgemäß formulierten Wirkstoffe Glufosinate-ammonium und Oxyfluorfen klar über derjenigen derselben - allerdings in Form einer Makroemulsion formulierten - Wirkstoffe. Entsprechendes gilt in der Regel auch für andere erfindungsgemäße Formulierungen. Folglich eignen sich die erfindungsgemäßen Formulierungen in besonderem Maße zur Bekämpfung unerwünschten Pflanzenwuchses.
In den folgenden Beispielen beziehen sich Mengenangaben auf das Gewicht, sofern nichts anderes angegeben ist. Die Beispiele der Tabelle 1 betreffen Vergleichsbeispiele (= nicht erfindungsgemäße Beispiele), die keine Mikroemulsionen ergeben. In Tabelle 2 sind Beispiele für erfindungsgemäße Mikroemulsionen aufgeführt. In Tabelle 3 sind außerdem Beispiele für erfindungsgemäße einphasige Systeme aufgeführt. Tabelle 4 enthält vergleichende biologische Resultate zur herbiziden Wirkung der beschriebenen Formulierungen.

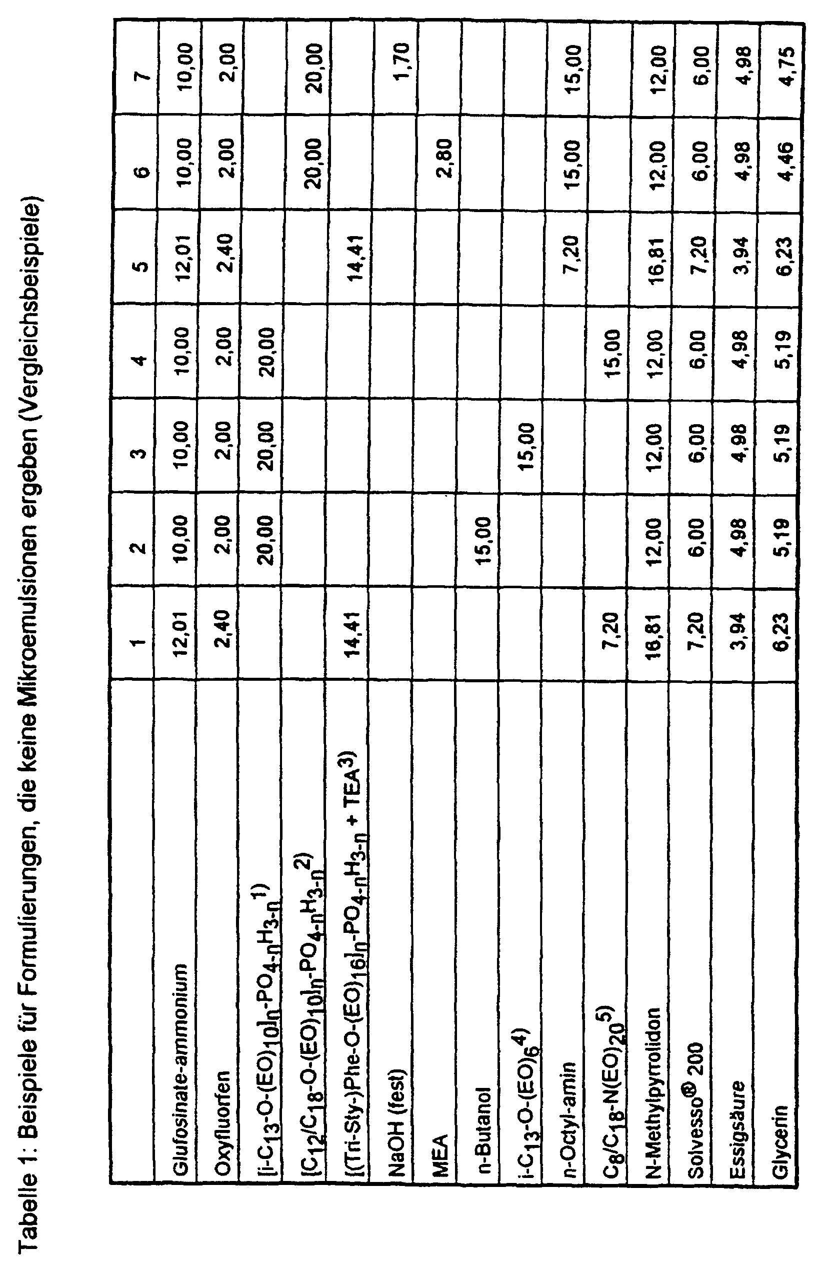

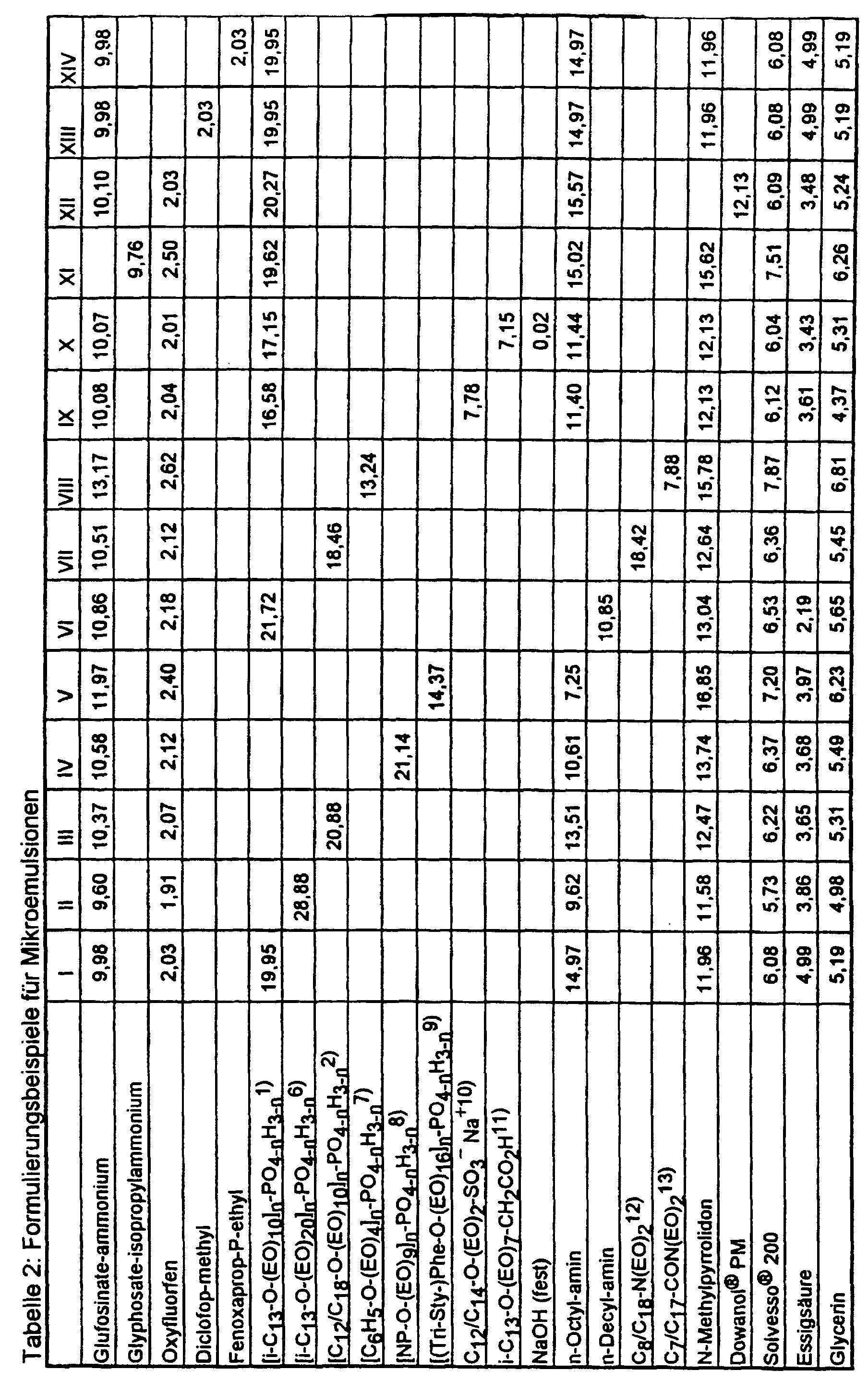

**Tabelle 3:**

| Formulierungsbeispiele für einphasige wäßrige Lösungen | | |
|---|---|---|
| Komponenten außer Wasser | Beispiel 1 | Beispiel 2 |
| Glufosinate-ammonium | 14,2 | 14,2 |
| [i-C₁₃-O-(EO)₁₀]ₙ-PO₄₋ₙH₃₋ₙ¹⁾ | 20 | 20 |
| n-Octylamin | 15 | 15 |
| N-Methylpyrrolidon | 10 | |
| Essigsäure | 5 | 5 |
| Glyzerin | 5 | 5 |
| | | |

### Anwendungsbeispiel

Samen bzw. Rhizomstücke von mono- und dikotylen Unkräutern werden in Papptöpfen in sandigem Lehmboden ausgelegt, mit Erde abgedeckt und im Gewächshaus unter guten Wachstumsbedingungen angezogen. Drei Wochen nach der Aussaat werden die Versuchspflanzen im Dreiblattstadium mit den Formulierungen und Dosierungen gemäß Tabelle 4 mit einer Wasseraufwandmenge von 300 l/ha behandelt. Nach 28 Tagen Standzeit der Versuchspflanzen im Gewächshaus unter optimalen Wachstumsbedingungen wird die Wirkung der Präparate optisch im Vergleich zu unbehandelten Kontrollen bonitiert. Die Ergebnisse sind in Tabelle 4 zusammengefaßt.

**Tabelle 4:**

| Biologische Resultate zur herbiziden Wirksamkeit | | | |
|---|---|---|---|
| Formulierung | Wirkstoffe / Dosis (a.i./ha) | Wirkung ^{c)} | Schadpflanze |
| Makroemulsion ^{a)} | 450 g Glufosinate-ammonium + 90 g Oxyfluorfen | 70 | Hordeum vulgaris |
| " | | 96,5 | Brassica napus |
| " | | 55 | Lolium multiflorum |
| " | | 55 | Stellaria medica |
| | | | |
| Mikroemulsion I ^{b)} | 450 g Glufosinate-ammonium + 90 g Oxyfluorfen | 75 | Hordeum vulgaris |
| " | " | 98 | Brassica napus |
| " | " | 65 | Lolium multiflorum |
| " | " | 60 | Stellaria media |

| | | | |
|---|---|---|---|
| ^{a)} Rezeptur gemäß DE-A-19501986 | | | |
| ^{b)} Mikroemulsion aus Tabelle 2 | | | |
| ^{c)} Herbizide Wirkung in % nach 28 Tagen | | | |

Abkürzungen und Fußnoten zu Tabellen 1, 2, 3 und 4:
- n: In den Formeln gilt n = 0-3, d. h. es handelt sich jeweils um ein Gemisch der Phosphorester mit n = 1, 2 und 3, wobei die sauren Anteile mit n = 1 und 2 wesentlich sind;
- Zahlen: Alle Angaben sind Anteile in Gewichtsprozent bezogen auf das Gewicht der Formulierung (= 100 Gewichtsprozent); Restanteil bis 100 Gewichtsprozent ist der Wasseranteil
- i-C₁₃-: = Isotridecyl
- C₈/C₁₈-: oder C₁₂/C₁₈- oder C₁₂/C₁₄- bedeuten Gemische von Fettalkylresten mit Ketten-längen im Bereich der in C-Atomen angegebenen Kettenlängen
- (Tri-Sty-)Phe-: = Tristyrylphenyl-
- EO: = "Ethylenoxid", d.h. eine Gruppe der Formel -CH₂-CH₂-O- (Ethylenoxy) oder, falls endständig, -CH₂-CH₂-O-H (Hydroxyethyl)
- TEA: = Triethanolamin
- MEA: = Monoethanolamin
- NP-: = Nonylphenyl

Erläuterungen zu Hochzahlen ¹⁾ bis ¹³⁾):
1) Phosphatierter ethoxylierter Isotridecylalkohol (speziell Rhodafac RS 710® , (Rhone-Poulenc))
2) Phosphatierter ethoxylierter Fettalkohol (speziell Crafol AP 240® , Henkel)
3) Phosphatiertes ethoxyliertes Tristyrylphenol, neutralisiert mit TEA (speziell Soprophor FL® , Rhone-Poulenc); nicht erfindungsgemäß, weil nicht sauer;
4) Ethoxylierter Isotridecylalkohol (speziell Genapol X-060® , Clariant)
5) Kokosfettaminethoxylat (speziell Genamin C-200® , Clariant); kein Kotensid im Sinne der Erfindung; bildet Aggregate (Mizellen);
6) Phosphatierter ethoxylierter Isotridecylalkohol (speziell Servoxyl VPDZ 20/100® , Hüls)
7) Phosphatiertes ethoxyliertes Phenol mit folgenden Anteilen im Gemisch: 7,5-8,5 Gew.-% n=0, 1-10 Gew.-% C₆H₅-O-(EO)₄H, 80-90 Gew.-% n=1 und ca. 2 Gew.-% n=2
8) Phosphatiertes ethoxyliertes Nonylphenol (speziell Rhodafac PA/19® , Rhone-Poulenc)
9) Phosphatiertes ethoxyliertes Tristyrylphenol (speziell Soprophor 3D33® (Rhone-Poulenc))
10) Fettalkoholdiethylenglykolethersulfat (speziell Genapol LRO® , Clariant)
11) 2-(Isotridecyloxy-polyethylenoxy)-ethyl-carboxymethyl-ether (speziell Marlowet 4538® , Hüls)
12) Kokosnußfettsäureaminethoxylat (speziell Genamin C-020® , Clariant)
13) Fettsäureamidethoxylat (speziell Comperlan LS® , Henkel)

## Patentansprüche

1. Thermodynamisch stabile flüssige wässrige oder wässrig-organische Formulierungen, **dadurch gekennzeichnet, dass** sie ein Tensidsystem aus einem oder mehreren basischen Kotensiden und einem oder mehreren Tensiden aus der Gruppe der sauren Phosphorsäureester enthalten, wobei die basischen Kotenside besser in einer Ölphase als in Wasser löslich sind und keine mizellaren Strukturen in Wasser ausbilden.

2. Formulierungen gemäß Anspruch 1, **dadurch gekennzeichnet, dass** als Tenside aus der Gruppe der sauren Phosphorsäureester solche verwendet werden, worin die veresterten Säurereste mit einer oder mehreren Verbindungen aus der Gruppe von Alkoholkomponenten (a2) bis (d2) verestert sind, wobei
(a2) Alkanole mit 1 bis 22 C-Atomen oder unsubstituierte oder substituierte Cycloalkanole mit 5 bis 12 C-Atomen,
(b2) oxalkylierte Alkanole mit bis zu 24 C-Atomen im Alkylrest und 1 bis 150 Alkylenoxy-einheiten im Alkylenoxy- bzw. Polyalkylenoxy-teil und
(c2) Phenol oder oxalkyliertes Phenol, wobei der Phenylrest jeweils unsubstituiert oder durch einen, zwei oder drei Alkylreste mit jeweils 4 bis 12 C-Atomen oder durch einen, zwei oder drei Aryl- oder Arylalkylreste mit 6 bis 12 C-Atomen substituiert ist und im oxalkylierten Fall 1 bis 150 Alkylenoxy-einheiten im Alkylenoxy- bzw. Polyalkylenoxy-teil aufweist, und
(d2) oxalkylierte Alkylamine bedeuten.

3. Formulierungen nach Anspruch 1 oder 2, **dadurch gekennzeichnet, dass** die sauren Phosphorsäureester-Tenside
phosphatierte ethoxylierte längerkettige Alkohole oder Fettalkohole mit 10 bis 18 C-Atomen im Alkylrest und 1 bis 30 Ethylenoxy-einheiten im Polyethylenoxy-teil,
phosphatiertes ethoxyliertes Phenol oder Alkylphenol mit 4 bis 12 C-Atomen im Alkylrest und jeweils 1 bis 30 Ethylenoxy-einheiten im Polyethylenoxy-teil oder
phosphatiertes ethoxyliertes Tristyrylphenol mit 1 bis 150 Ethylenoxyeinheiten im Polyethylenoxy-teil
oder ein Gemisch der Tenside sind.

4. Formulierungen gemäß einem der Ansprüche 1 bis 3, **dadurch gekennzeichnet, dass** die basischen Kotenside aus der Gruppe
(a1) N-Alkylamine oder unsubstituierte oder substituierte Cycloalkylamine,
(b1) oxalkylierte Produkte von N-Alkylaminen,
(c1) Alkylaminpolypropylenamine,
(d1) oxalkylierte Produkte von Amiden oder N-substituierten Amiden,
(e1) Alkylamidopropylamine sind.

5. Formulierungen nach einem der Ansprüche 1 bis 4, wobei die Formulierungen
(a) einen oder mehrere in Wasser lösliche Wirkstoffe (Typ (a)) und
(b) gegebenenfalls einen oder mehrere in Wasser unlösliche Wirkstoffe (Typ (b)),
(c) gegebenenfalls organische Lösungsmittel enthalten.

6. Formulierungen gemäß Anspruch 5, **dadurch gekennzeichnet, dass** sie als wasserlösliche Wirkstoffe eine oder mehrere Verbindungen der Formel (1) oder deren Salze, 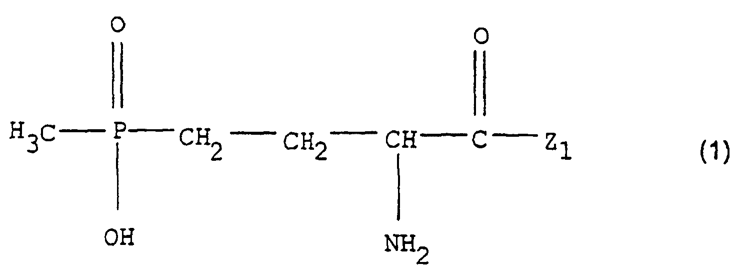 worin
Z₁ einen Rest der Formel -OM, -NHCH(CH₃)CONHCH(CH₃)CO₂M oder -NHCH(CH₃)CONHCH[CH₂CH(CH₃)₂]CO₂M und M=H oder ein Salz bildendes Kation bedeuten,
oder eine oder mehrere Verbindungen der Formeln (2) oder deren Salze, 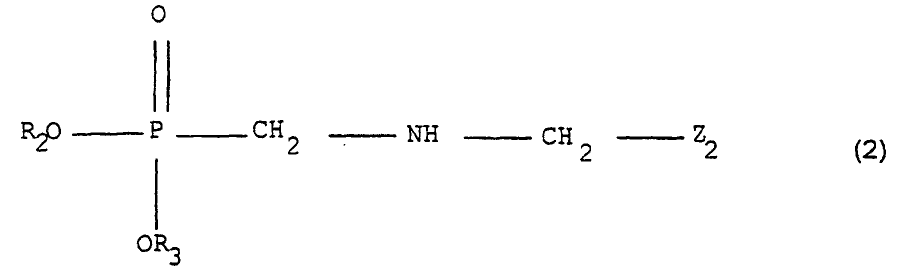 worin
Z₂ einen Rest der Formel CN oder CO₂R₁ bedeutet, in dem R₁ = Q oder ein Salz bildendes Kation ist und dabei Q = H, Alkyl, Alkenyl, Alkoxyalkyl oder C₆-C₁₀-Aryl, das unsubstituiert oder substituiert ist, und
R₂,R₃ jeweils unabhängig voneinander H, Alkyl, C₆-C₁₀-Aryl, das unsubstituiert oder substituiert ist, oder Biphenyl oder ein Salz bildendes Kation bedeuten, oder eine oder mehrere Verbindungen der Formel (3), 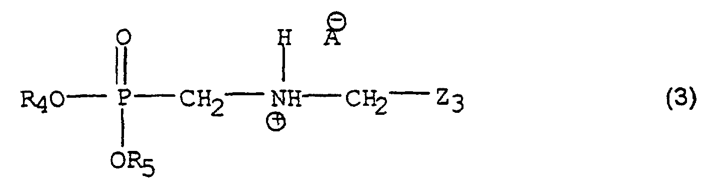 worin
Z₃ einen Rest CN oder CO₂Q' bedeutet, in dem Q' = H, Alkyl, Alkenyl, Alkoxyalkyl oder C₆-C₁₀-Aryl, das unsubstituiert oder substituiert ist, und
R₄ und R₅ jeweils H, Alkyl oder C₆-C₁₀-Aryl bedeuten, das unsubstituiert oder substituiert ist, und
A ein Salz bildendes Anion bedeutet,
oder Gemische aus zwei oder mehreren der definierten Verbindungen enthalten.

7. Formulierungen gemäß Anspruch 5 oder 6, **dadurch gekennzeichnet, dass** sie als wasserunlösliche Wirkstoffe Verbindungen aus der Gruppe der Diphenylether-Herbizide enthalten.

8. Formulierungen gemäß einem der Ansprüche 5 bis 7, **dadurch gekennzeichnet, dass** sie
(a) 1 bis 50 Gew.-% Wirkstoffe vom Typ (a),
(b) 0 bis 70 Gew.% Wirkstoffe vom Typ (b),
(c) 0 bis 60 Gew.-% organische Lösungsmittel,
(d) 3 bis 70 Gew.-% des Tensidsystems aus einem oder mehreren basischen Kotensiden und einem oder mehreren Tensiden aus der Gruppe der sauren Phosphorsäureester (= Komponentenmischung (d)),
(e) 0 bis 20 Gew.-% weitere anionogene Tenside,
(f) 0 bis 20 Gew.-% übliche Formulierungshilfsmittel,
(g) 0,1 bis 60 Gew.-% Wasser enthalten.

9. Formulierungen gemäß einem der Ansprüche 5 bis 8, **dadurch gekennzeichnet, dass** sie Mikroemulsionen sind, welche
(a) 5 bis 20 Gew-% Wirkstoff vom Typ (a),
(b) 1 bis 10 Gew.-% Wirkstoff vom Typ (b),
(c1) 5 bis 30 Gew.-% organische Lösungsmittel, die mit dem Wirkstoff (b) eine Phase bilden,
(c2) 0 bis 30 Gew.-% organische Lösungsmittel, die wasserlöslich sind,
(d) 10 bis 40 Gew.-% des Tensidsystems aus einem oder mehreren basischen Kotensiden und einem oder mehreren Tensiden aus der Gruppe der sauren Phosphorsäureester (= Komponentenmischung (d)),
(e) 0 bis 20 Gew.-% weitere anionogene Tenside,
(f) 0 bis 20 Gew.-% übliche Formulierungshilfsmittel und
(g) 10 bis 40 Gew.-% Wasser enthalten.

10. Formulierungen gemäß Anspruch 5 oder 6, **dadurch gekennzeichnet, dass** sie wässrige einphasige Lösungen von Wirkstoffen des Typs (a) sind, welche
(a) 1 bis 50 % Wirkstoff vom Typ (a),
(d) 3 bis 70 % des Tensidsystems aus einem oder mehreren basischen Kotensiden und einem oder mehreren Tensiden aus der Gruppe der sauren Phosphorsäureester (= Komponentenmischung (d)),
(c) 0 bis 40 Gew.-% ohne Phasentrennung zumischbare organische Lösungsmittel,
(e) 0 bis 20 Gew.-% weitere anionogene Tenside,
(f) 0 bis 20 Gew.-% übliche Formulierungshilfsmittel und
(g) 10 bis 40 % Wasser enthalten.

11. Verfahren zur Herstellung einer nach einem oder mehreren der Ansprüche 1 bis 10 definierten Formulierung, **dadurch gekennzeichnet, dass** man die Komponenten, die in der Formulierung enthalten sein sollen, vermischt.

12. Verfahren zur Bekämpfung von unerwünschtem Pflanzenwuchs, **dadurch gekennzeichnet, dass** man eine wirksame Menge einer Formulierung gemäß Anspruch 6 auf die Pflanzen, Pflanzenteile oder die Anbaufläche appliziert.

13. Verwendung einer Formulierung nach Anspruch 6 als herbizides Mittel.

14. Verwendung des Tensidsystems nach Anspruch 1 zur Herstellung von thermodynamisch stabilen wässrigen oder wässrig-organischen flüssigen Formulierungen.

15. Verwendung nach Anspruch 14 zur Herstellung von wässrigen Mikroemulsionen.

## Claims

1. A thermodynamically stable liquid aqueous or aqueous-organic formulation, which comprises a surfactant system of one or more basic cosurfactants and one or more surfactants from the group of the acidic phosphoric esters, the basic cosurfactants being better soluble in an oil phase than in water and not forming any micellar structures in water.

2. The formulation as claimed in claim 1, wherein the surfactants from the group of the acidic phosphoric esters used are those in which the esterified acid radicals are esterified with one or more compounds from the group of alcohol components (a2) to (d2), where
(a2) are alkanols having 1 to 22 carbon atoms or unsubstituted or substituted cycloalkanols having 5 to 12 carbon atoms,
(b2) are alkoxylated alkanols having up to 24 carbon atoms in the alkyl radical and 1 to 150 alkyleneoxy units in the alkyleneoxy or polyalkyleneoxy moiety and
(c2) are phenol or alkoxylated phenol, where the phenyl radical is in each case unsubstituted or substituted by one, two or three alkyl radicals having in each case 4 to 12 carbon atoms or by one, two or three aryl or arylalkyl radicals having 6 to 12 carbon atoms and having, in the alkoxylated case, 1 to 150 alkyleneoxy units in the alkyleneoxy or polyalkyleneoxy moiety, and
(d2) are alkoxylated alkylamines.

3. The formulation as claimed in claim 1 or 2, wherein the acidic phosphoric ester surfactants are
phosphated ethoxylated long-chain alcohols or fatty alcohols having 10 to 18 carbon atoms in the alkyl radical and 1 to 30 ethyleneoxy units in the polyethyleneoxy moiety,
phosphated ethoxylated phenol or alkylphenol having 4 to 12 carbon atoms in the alkyl radical and in each case 1 to 30 ethyleneoxy units in the polyethyleneoxy moiety, or
phosphated ethoxylated tristyrylphenol having 1 to 150 ethyleneoxy units in the polyethyleneoxy moiety
or a mixture of the surfactants.

4. The formulation as claimed in any of claims 1 to 3, wherein the basic cosurfactants are selected from the group
(a1) N-alkylamines or unsubstituted or substituted cycloalkylamines,
(b1) alkoxylated products of N-alkylamines,
(c1) alkylaminepolypropyleneamines,
(d1) alkoxylated products of amides or N-substituted amides,
(e1) alkylamidopropylamines.

5. The formulation as claimed in any of claims 1 to 4, where the formulations comprise
(a) one or more water-soluble active compounds (type (a)) and
(b) optionally one or more water-insoluble active compounds (type (b)),
(c) optionally organic solvents.

6. The formulation as claimed in claim 5, which comprises as water-soluble active compounds one or more compounds of the formula (1) or salts thereof, 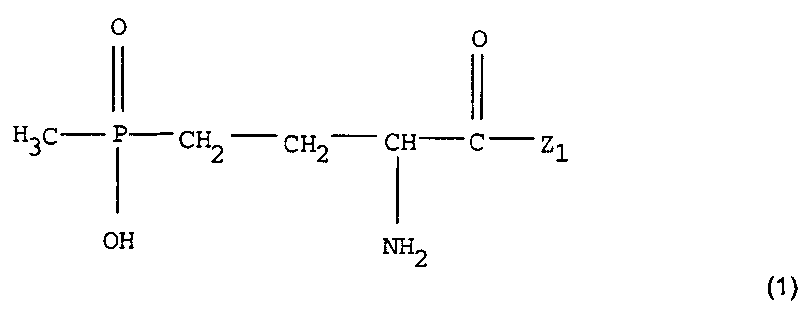 in which
Z₁ is a radical of the formula -OM, -NHCH(CH₃)CONHCH(CH₃)CO₂M or -NHCH(CH₃)CONHCH[CH₂CH(CH₃)₂]CO₂M and
M=H or a salt-forming cation,
or one or more compounds of the formula (2) or salts thereof, 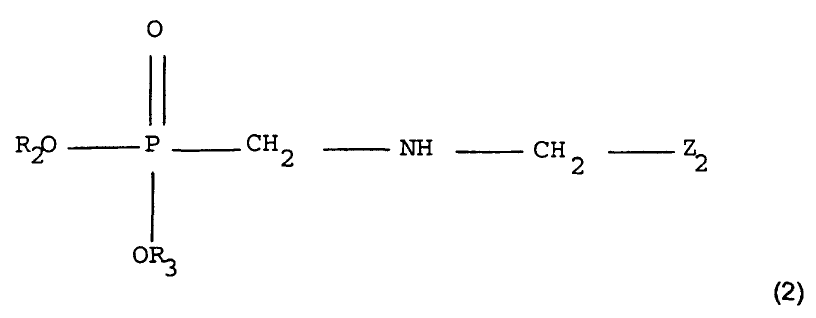 in which
Z₂ is a radical of the formula CN or CO₂R₁ in which R₁ = Q or a salt-forming cation and Q = H, alkyl, alkenyl, alkoxyalkyl or C₆-C₁₀-aryl, which is unsubstituted or substituted, and
R₂,R₃ in each case independently of one another are H, alkyl, C₆-C₁₀-aryl which is unsubstituted or substituted or biphenyl or a salt-forming cation,
or one or more compounds of the formula (3), 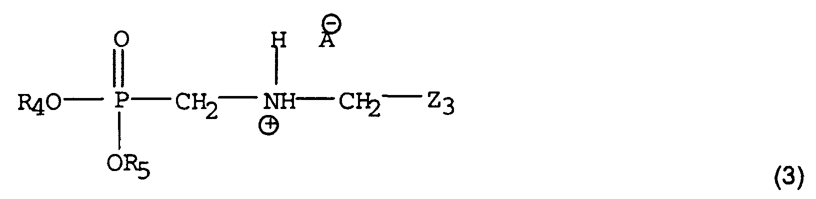 in which
Z₃ is a radical CN or CO₂Q' in which Q' = H, alkyl, alkenyl, alkoxyalkyl or C₆-C₁₀-aryl which is unsubstituted or substituted, and
R₄ and R₅ are each H, alkyl or C₆-C₁₀-aryl which is unsubstituted or substituted, and
A is a salt-forming anion,
or mixtures of two or more of the above-defined compounds.

7. The formulation as claimed in claim 5 or 6, which comprises as water-insoluble active compounds compounds selected from the group of the diphenyl ether herbicides.

8. The formulation as claimed in any of claims 5 to 7, which comprises
(a) 1 to 50% by weight of active compounds of type (a),
(b) 0 to 70% by weight of active compounds of type (b),
(c) 0 to 60% by weight of organic solvents,
(d) 3 to 70% by weight of the surfactant system of one or more basic cosurfactants and one or more surfactants from the group of the acidic phosphoric esters (= component mixture (d)),
(e) 0 to 20% by weight of other anionogenic surfactants,
(f) 0 to 20% by weight of customary formulation auxiliaries,
(g) 0.1 to 60% by weight of water.

9. The formulation as claimed in any of claims 5 to 8, wherein the formulations are microemulsions comprising
(a) 5 to 20% by weight of active compound of type (a),
(b) 1 to 10% by weight of active compound of type (b),
(c1) 5 to 30% by weight of organic solvents which form one phase with the active compound (b),
(c2) 0 to 30% by weight of water-soluble organic solvents,
(d) 10 to 40% by weight of the surfactant system of one or more basic cosurfactants and one or more surfactants from the group of the acidic phosphoric esters (= component mixture (d)),
(e) 0 to 20% by weight of other anionogenic surfactants,
(f) 0 to 20% by weight of customary formulation auxiliaries and
(g) 10 to 40% by weight of water.

10. The formulation as claimed in claim 5 or 6, wherein the formulation is an aqueous single-phase solution of active compounds of type (a) comprising
(a) 1 to 50% of active compound of type (a),
(d) 3 to 70% of the surfactant system of one or more basic cosurfactants and one or more surfactants from the group of the acidic phosphoric esters (= component mixture (d)),
(c) 0 to 40% by weight of organic solvents which can be admixed without phase separation,
(e) 0 to 20% by weight of other anionogenic surfactants,
(f) 0 to 20% by weight of customary formulation auxiliaries and
(g) 10 to 40% of water.

11. A process for preparing a formulation as defined in one or more of claims 1 to 10, which comprises mixing the components which are meant to be part of the formulation.

12. A method for controlling undesirable plant growth, which comprises applying an effective amount of a formulation as claimed in claim 6 onto the plants, parts of plants or the area under cultivation.

13. A use of a formulation as claimed in claim 6 as herbicide.

14. A use of the surfactant system as claimed in claim 1 for preparing thermodynamically stable aqueous or aqueous-organic liquid formulations.

15. The use as claimed in claim 14 for preparing aqueous microemulsions.

## Revendications

1. Formulations liquides aqueuses ou aqueuses-organiques thermodynamiquement stables, **caractérisées en ce qu'**elles renferment un système d'agents de surface d'un ou plusieurs co-agents de surface basiques et d'un ou plusieurs agents de surface pris dans le groupe des esters acides de l'acide phosphorique, les co-agents de surface étant plus solubles dans une phase huileuse que dans l'eau et ne formant pas de structures micellaires dans l'eau.

2. Formulations selon la revendication 1, **caractérisées en ce qu'**on utilise en tant qu'agents de surface des esters acides de l'acide phosphorique, dans lesquels les restes acides estérifiés sont estérifiés par un ou plusieurs composés pris dans le groupe des composants alcool (a2) à (d2), qui sont
(a2) des alcanols présentant 1 à 22 atomes de carbone ou cycloalcanols présentant 5 à 12 atomes de carbone non substitués ou substitués,
(b2) des alcanols oxalkylés présentant jusqu'à 24 atomes de carbone dans le reste alkyle et 1 à 150 unités oxyalkylènes dans le fragment oxyalkylène ou polyoxyalkylène et
(c2) le phénol ou le phénol oxalkylé, le reste phényle étant à chaque fois non substitué ou substitué par un, deux ou trois restes alkyles chacun présentant 4 à 12 atomes de carbone ou par un, deux ou trois restes aryles ou arylalkyles présentant 6 à 12 atomes de carbone et dans le cas oxalkylé présentant 1 à 150 unités oxyalkylène dans le fragment oxyalkylène ou polyoxyalkylène, et
(d2) des alkylamines oxalkylés.

3. Formulations selon les revendications 1 ou 2, **caractérisées en ce que** les agents de surface esters acides de l'acide phosphorique sont
des alcools ou alcools gras oxéthylés phosphatés à chaîne longue présentant 10 à 18 atomes de carbone dans le reste alkyle et 1 à 30 unités oxyde d'éthylène dans le fragment polyoxyéthylène,
le phénol ou un alkylphénol phosphatés oxéthylés présentant 4 à 12 atomes de carbone dans le reste alkyle et à chaque fois 1 à 30 unités oxyéthylène dans le fragment polyoxyéthylène, ou le tristyrylphénol phosphaté oxéthylé présentant 1 à 150 unités oxyéthylène dans le fragment polyoxyéthylène,
ou un mélange des agents de surface.

4. Formulations selon l'une quelconque des revendications 1 à 3, **caractérisées en ce que** les co-agents de surface basiques sont pris dans le groupe
(a1) des N-alkylamines ou cycloalkylamines non substituées ou substituées,
(b1) des produits oxalkylés de N-alkylamines,
(c1) des alkylaminopolypropylénamines,
(d1) des produits oxalkylés d'amides ou d'amides N-substitués,
(e1) des alkylamidopropylamines.

5. Formulations selon l'une quelconque des revendications 1 à 4, où les formulations contiennent
(a) une ou plusieurs substances actives hydrosolubles (type (a)) et
(b) éventuellement une ou plusieurs substances actives insolubles dans l'eau (type (b)),
(c) éventuellement des solvants organiques.

6. Formulations selon la revendication 5, **caractérisées en ce qu'**elles contiennent en tant que substances actives hydrosolubles un ou plusieurs composés de formule (1) ou leurs sels, 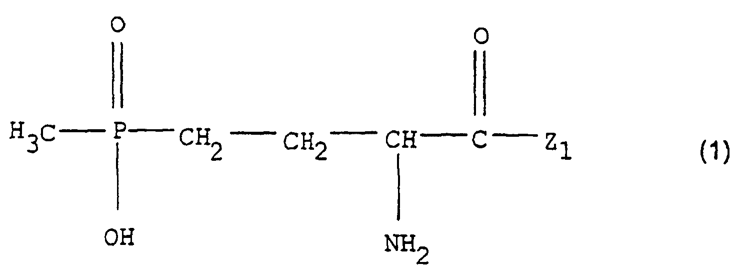 où
Z₁ représente un reste de formule -OM, -NHCH (CH₃) CONHCH (CH₃) CO₂M ou
-NHCH (CH₃) CONHCH [CH₂CH (CH₃)₂] CO₂M et
M=H ou un cation salifiant,
ou un ou plusieurs composés de formule (2) ou leurs sels 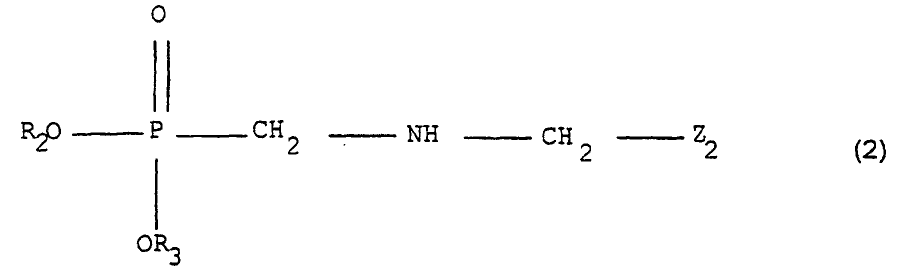 où
Z₂ représente un reste de formule CN ou CO₂R₁, dans lequel R₁ = Q ou un cation salifiant et Q = H, alkyle, alcényle, alkoxyalkyle ou aryle en C₆-C₁₀, qui est non substitué ou substitué, et
R₂, R₃ chacun indépendamment l'un de l'autre représente H, alkyle, aryle en C₆-C₁₀, qui est non substitué ou substitué, ou biphényle ou un cation salifiant,
ou un ou plusieurs composés de formule (3), 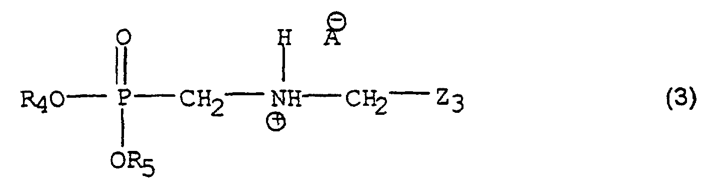 où
Z₃ représente un reste CN ou CO₂Q', dans lequel Q' = H, alkyle alcényle, alkoxyalkyle ou aryle en C₆-C₁₀, qui est non substitué ou substitué, et
R₄ et R₅ chacun représente H, alkyle ou aryle en C₆-C₁₀, qui est non substitué ou substitué, et
A représente un anion salifiant,
ou des mélanges de deux ou plusieurs des composés définis.

7. Formulations selon les revendications 5 ou 6, **caractérisées en ce qu'**elles renferment en tant que substances actives insolubles dans l'eau des composés pris dans le groupe des herbicides à base d'éther diphénylique.

8. Formulations selon l'une des revendications 5 à 7, **caractérisées en ce qu'**elles renferment
(a) de 1 à 50 % en masse de substances actives de type (a),
(b) de 0 à 70 % en masse de substances actives de type (b),
(c) de 0 à 60 % en masse de solvants organiques,
(d) de 3 à 70 % en masse du système d'agents de surface d'un ou plusieurs co-agents de surface basiques et d'un ou plusieurs agents de surface pris dans le groupe des esters acides de l'acide phosphorique (= mélange de composants (d)),
(e) de 0 à 20 % en masse d'autres agents de surface anionogènes,
(f) de 0 à 20 % en masse d'adjuvants de formulation usuels,
(g) de 0,1 à 60 % en masse d'eau.

9. Formulations selon l'une des revendications 5 à 8, **caractérisées en ce qu'**il s'agit de microémulsions, qui renferment
(a) de 5 à 20 % en masse de substance active de type (a),
(b) de 1 à 10 % en masse de substance active de type (b),
(c1) de 5 à 30 % en masse de solvants organiques qui forment une phase avec la substance active (b),
(c2) de 0 à 30 % en masse de solvants organiques qui sont hydrosolubles,
(d) de 10 à 40 % en masse du système d'agents de surface d'un ou plusieurs co-agents de surface basiques et d'un ou plusieurs agents de surface pris dans le groupe d'esters acides de l'acide phosphorique (= mélange de composants (d)),
(e) de 0 à 20 % en masse d'autres agents de surface anionogènes,
(f) de 0 à 20 % en masse d'adjuvants de formulation usuels et
(g) de 10 à 40 % en masse d'eau.

10. Formulations selon les revendications 5 ou 6, **caractérisées en ce qu'**elles sont des solutions aqueuses monophasiques de substances actives de type (a) renfermant
(a) de 1 à 50 % de substance active de type (a),
(d) de 3 à 70 % du système d'agents de surface d'un ou plusieurs co-agents de surface basiques et d'un ou plusieurs agents de surface pris dans le groupe des esters acides de l'acide phosphorique (= mélange de composants (d)),
(c) de 0 à 40 % en masse de solvants organiques miscibles sans séparation de phases,
(e) de 0 à 20 % en masse d'autres agents de surface anionogènes,
(f) de 0 à 20 % en masse d'adjuvants de formulation usuels et
(g) de 10 à 40 % en masse d'eau.

11. Procédé pour la préparation d'une formulation définie selon une ou plusieurs des revendications 1 à 10, **caractérisé en ce qu'**on mélange les composants, qui doivent être contenus dans la formulation.

12. Procédé pour la lutte contre une végétation indésirable, **caractérisé en ce qu'**on applique une quantité efficace d'une formulation selon la revendication 6 aux plantes, aux parties de plantes ou à la surface cultivable.

13. Utilisation d'une formulation selon la revendication 6 en tant qu'agent herbicide.

14. Utilisation d'un système d'agents de surface selon la revendication 1, pour la préparation de formulations liquides aqueuses ou aqueuses-organiques thermodynamiquement stables.

15. Utilisation selon la revendication 14 pour la préparation de microémulsions aqueuses.
